(19) Europäisches Patentamt
European Patent Office
Office européen des brevets

(11) **EP 2 555 148 A1**

(12) **EUROPEAN PATENT APPLICATION**
published in accordance with Art. 153(4) EPC

(43) Date of publication:
**06.02.2013 Bulletin 2013/06**

(51) Int Cl.:
***G06Q 30/00*** *(2012.01)*

(21) Application number: **11762799.2**

(22) Date of filing: **28.03.2011**

(86) International application number:
**PCT/JP2011/057682**

(87) International publication number:
**WO 2011/122575 (06.10.2011 Gazette 2011/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2010 JP 2010077359**

(71) Applicant: **Rakuten, Inc.**
**Tokyo 140-0002 (JP)**

(72) Inventor: **EMURA Sadaaki**
**Tokyo 140-0002 (JP)**

(74) Representative: **Price, Christopher et al**
**EIP**
**Fairfax House**
**15 Fulwood Place**
**London WC1V 6HU (GB)**

(54) **PRODUCT RECOMMENDATION DEVICE, PRODUCT RECOMMENDATION METHOD, PROGRAM, AND RECORDING MEDIUM**

(57)     A time storage unit (102) stores, for each of products included in a predetermined product group, an assumed time that is assumed to be required from start of usage of a product until end of usage of the product. A history storage unit (101) stores history information including a user identifier of a user who purchased any of the products included in the product group, the purchased product, a purchase date and time. An estimation unit (103) acquires history information associated with a user identifier of a recommendation-receiving user, and estimates, from the history information, a usage-end date and time of a most recently purchased product based on a usage time required from start of usage by the recommendation-receiving user of a product other than the most recently purchased product until end of usage thereof and an assumed time. A presentation unit (104) selects, from the product group, a product other than the most recently purchased product, and presents a message recommending the other selected products at the estimated date and time.

**FIG. 3**

## Description

Technical Field

The present invention relates to a product recommendation device, a product recommendation method, a program and a recording medium that recommend a product to a user at a suitable timing.

Background Art

A shopping system that allows for transaction of products, services, and/or the like through, for example, web pages has been known. In such a system, an art is known that introduces advertisements and products suitable for a user in order to encourage the user to purchase a product and/or the like. For example, Patent Literature 1 discloses an art to select an advertisement for presentation to a user based on information on the user's attribute and advertisements that the user has previously clicked. When a product is introduced to a user, it is common to predict a purchase timing when the user will purchase the product based on a purchase history if the user has repeatedly purchased the product.

Prior Art Literature

Patent Literature

Patent Literature 1: Japanese Patent No. 3984473

Disclosure of Invention

Problem to be Solved by the Invention

However, for certain types of products such as games or books, the same product is rarely purchased again, and the time when usage of a purchased product finishes varies according to each product. For such a product, it is difficult to predict the next purchase time from the purchase history and recommend the product at a suitable moment.

The present invention solves the above problem, and is intended to provide a product recommendation device, a product recommendation method, a program and a recording medium that are suitable for estimating the time when a user finishes using a product and recommending a product to the user at a suitable timing, with respect to a type of products of which time required to finish usage varies according to each purchased product.

Means for Solving the Problems

A product recommendation device according to a first aspect of the present invention includes:

a time storage unit to store, for each of products included in a predetermined product group, an assumed time that is assumed to be required from start of a product usage until end of the product usage;
a history storage unit to store history information, the history information including a user identifier of each user who purchased any of the products in the product group, the purchased product, and a purchase date and time of the product;
an estimation unit that acquires, from the history information stored in the history storage unit, history information associated with the user identifier of a user who receives recommendation of a product (hereinafter referred to as "recommendation-receiving user"), determines, from the acquired history information, a usage time required from start of usage by the recommendation-receiving user of a product other than a product most recently purchased by the recommendation-receiving user until end of usage of the product, and estimates a date and time when the recommendation-receiving user finishes using the most recently purchased product, based on the determined usage time and the assumed time for the product associated with the acquired history information, the assumed time being stored in the time storage unit; and
a presentation unit that selects, from the product group, a product other than the product most recently purchased by the recommendation-receiving user, and presents a message recommending the other selected product to the recommendation-receiving user at the estimated date and time.

In the product recommendation device according to the first aspect of the present invention, the estimation unit may
sort products associated with history of the recommendation-receiving user stored in the history storage unit in order of purchase date and time, such as product 1, product 2, ..., product n,

determine a ratio $c[i] = (T[i+1] - T[i])/A[i]$, for each integer $i = 1, 2, ... n-1$, from the purchase date and time represented by $T[i]$ when the recommendation-receiving user purchased the product $i$, the purchase date and time represented by $T[i+1]$ when the recommendation-receiving user purchased the product $(i+1)$, and the assumed time represented by $A[i]$ on the product $i$ stored in the time storage unit,

estimate, from an array of the obtained ratios $c[1]$, $c[2]$, ... $c[n-1]$, a ratio $c[n]$ of the product n most recently purchased by the recommendation-receiving user, and

estimate the date and time when the recommendation-receiving user finishes using the most recently purchased product n to be $T[n] + A[n] \cdot c[n]$, from the most recent purchase date and time $T[n]$, the estimated ratio $c[n]$ and the stored time $A[n]$.

In the product recommendation device according to the first aspect of the present invention,

the estimation unit may estimate the ratio $c[n]$ of the product n most recently purchased by the recommendation-receiving user by using a weighted mean such that the ratio $c[i]$ ($i = 1$ to $n-1$) determined from the older purchase history less contributes to the ratio $c[n]$.

Alternatively, in the product recommendation device according to the first aspect of the present invention,

the estimation unit may estimate a value obtained by multiplying the weighted mean by a seasonal coefficient preliminarily defined according to a season of the purchase date and time $T[n]$ to be the ratio $c[n]$.

In the product recommendation device according to the first aspect of the present invention,

the history information may further include a sales date and time when the purchased product was sold, and

in the case where the recommendation-receiving user sold the purchased product $i$, the estimation unit compares the sales date and time represented by $S[i]$ when the product $i$ was sold and the purchase date and time $T[i+1]$ when the product $(i + 1)$ was purchased, and if the sales date and time $S[i]$ is earlier than the purchase date and time $T[i+1]$, the estimation unit may determine the ratio $c[i]$ to be $c[i] = (S[i] - T[i])/A[i]$.

Alternatively, in the product recommendation device according to the first aspect of the present invention,

the history information may further include a sales date and time when the purchased product was sold, and

in the case where the recommendation-receiving user sold the purchased product $i$, the estimation unit may determine the ratio $c[i]$ to be $c[i] = (S[i] - T[i])/A[i]$, using the sales date and time represented by $S[i]$ of the product $i$.

Alternatively, in the product recommendation device according to the first aspect of the present invention,

from history information including both of the purchase date and time and the sales date and time among the history information, an interval between the purchase date and time and the sales date and time of the product associated with the history information may be determined, and the assumed time stored in the time storage unit may be adjusted of the product based on the determined interval.

Alternatively, in the product recommendation device according to the first aspect of the present invention,

the assumed time stored in the time storage unit of a first product may be adjusted based on an interval between the purchase date and time included in history information associated with the first product and the purchase date and time included in history information associated with the second product, the second product being the most recently purchased among products purchased by the same user as that of the first product after purchase of the first product, among the history information.

A product recommendation method according to a second aspect of the present invention,

the product recommendation method being performed by a product recommendation device, the product recommendation device comprising: a time storage unit to store, for each of products included in a predetermined product group, an assumed time that is assumed to be required from start of a product usage until end of the product usage; a history storage unit to store history information, the history information including a user identifier of each user who purchased any of the products included in the product group, the purchased product, and a purchase date and time of the product; an estimation unit; and a presentation unit, the product recommendation method comprises:

an estimation step in which the estimation unit acquires, from the history information stored in the history storage unit, history information associated with the user identifier of a user who receives recommendation of a product (hereinafter referred to as "recommendation-receiving user"), determines, from the acquired history information, a usage time required from start of usage by the recommendation-receiving user of a product other than a product most recently purchased by the recommendation-receiving user until end of usage of the product, and estimates a date and time when the recommendation-receiving user finishes using the most recently purchased product, based on the determined usage time and an assumed time for the product associated with the acquired history information, the assumed time being stored in the time storage unit; and

a presentation step in which the presentation unit selects, from the product group, a product other than the product most recently purchased by the recommendation-receiving user, and presents a message recommending the other selected product to the recommendation-receiving user at the estimated date and time.

A program according to a third aspect of the present invention causes a computer to function as:

a time storage unit to store, for each of products included in a predetermined product group, an assumed time that is assumed to be required from start of a product usage until end of the product of usage;

a history storage unit to store history information, the history information including a user identifier of each user who purchased any of the products in the product group, the purchased product, and a purchase date and time of the product; an estimation unit that acquires, from the history information stored in the history storage unit, history information associated with the user identifier of a user who receives recommendation of a product (hereinafter referred to as "recommendation-receiving user"), determines, from the acquired history information, a usage time required from start of usage by the recommendation-receiving user of a product other than a product most recently purchased by the recommendation-receiving user until end of usage of the product, and estimates a date and time when the recommendation-receiving user finishes using the most recently purchased product, based on the determined usage time and the assumed time for the product associated with the acquired history information, the assumed time being stored in the time storage unit; and a presentation unit selects, from the product group, a product other than the product most recently purchased by the recommendation-receiving user, and presents a message recommending the other selected product to the recommendation-receiving user at the estimated date and time.

A computer-readable recording medium according to a fourth aspect of the present invention, the program causing a computer to function as:

> a time storage unit to store, for each of products included in a predetermined product group, an assumed time that is assumed to be required from start of a product usage until end of the product usage;
> a history storage unit to store history information, the history information including a user identifier of each user who purchased any of the products in the product group, the purchased product and a purchase date and time of the product;
> an estimation unit that acquires, from the history information stored in the history storage unit, history information associated with the user identifier of a user who receives recommendation of a product (hereinafter referred to as "recommendation-receiving user"), determines, from the acquired history information, a usage time required from start of usage by the recommendation-receiving user of a product other than a product most recently purchased by the recommendation-receiving user until end of usage the product, and estimates a date and time when the recommendation-receiving user finishes using the most recently purchased product, based on the determined usage time and the assumed time for the product associated with the acquired history information, the assumed time being stored in the time storage unit; and
> a presentation unit selects, from the product group, a product other than the product most recently purchased by the recommendation-receiving user, and presents a message recommending the other selected product to the recommendation-receiving user at the estimated date and time.

The program according to the present invention can be recorded on a computer-readable information recording medium such as a compact disk, flexible disk, hard disk, magnetic optical disk, digital video disk, magnetic tape, semiconductor memory and/or the like.

The program can be distributed and sold via a computer communication network, independently from a computer on which the program is executed. The information recording medium can be also distributed and sold independently from a computer.

Effect of the Invention

The present invention can provide a product recommendation device, a product recommendation method, a program and a recording medium that are suitable for estimating a date and time when a user finishes using a product and recommending a product to the user at a suitable timing, for a type of products of which time required to finish using varies according to each purchased product.

Brief Description of Drawings

FIG. 1 is a diagram illustrating a relationship between a product recommendation device according to an embodiment of the present invention and a terminal device operated by a user;

> FIG. 2 is a diagram illustrating a schematic configuration of a typical information processing device in which a product recommendation device according to an embodiment of the present invention is realized;
> FIG. 3 is a diagram illustrating a schematic configuration of the product recommendation device;
> FIG. 4 is a diagram illustrating a purchase activity by a user;
> FIG. 5 is a diagram for explaining a history table according to Embodiment 1;
> FIG. 6 is a diagram for explaining an average usage time table according to Embodiment 1;

FIG. 7 is a diagram for explaining a recommendation-receiving user history table according to Embodiment 1;

FIG. 8 is a diagram for explaining a product recommendation message presented to the recommendation-receiving user;

FIG. 9 is a flow chart for explaining processing performed by each unit of the product recommendation device according to Embodiment 1;

FIG. 10 is a flow chart for explaining a usage-end date and time estimation processing performed by an estimation unit of the product recommendation device according to Embodiment 1;

FIG. 11 is a diagram for explaining a seasonal coefficient table;

FIG. 12 is a flow chart for explaining a usage-end date and time estimation processing performed by an estimation unit of a product recommendation device according to Embodiment 2;

FIG. 13 is a diagram illustrating a purchase and sales activity by a user;

FIG. 14 is a diagram for explaining a history table according to Embodiment 3;

FIG. 15 is a diagram for explaining a recommendation-receiving user history table according to Embodiment 3;

FIG. 16 is a flow chart for explaining processing performed by each unit of a product recommendation device according to Embodiment 3;

FIG. 17 is a flow chart for explaining a usage-end date and time estimation processing performed by an estimation unit of the product recommendation device according to Embodiment 3; and

FIG. 18 is a flow chart for explaining a usage-end date and time estimation processing performed by an estimation unit of a product recommendation device according to Embodiment 4;

Mode(s) for Carrying Out the Invention

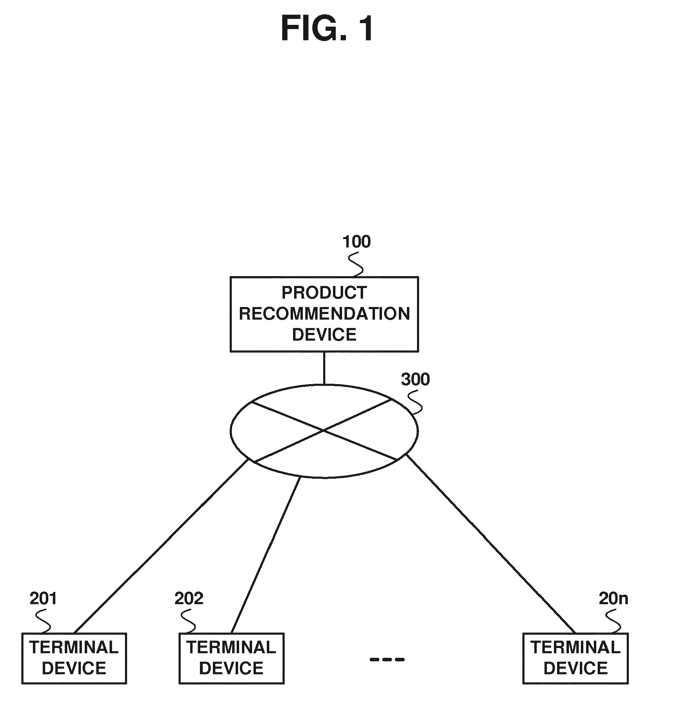

A product recommendation device 100 according to an embodiment of the present invention, as illustrated in FIG. 1, connects to the Internet 300, to which a plurality of terminal devices 201, 202 to 20n operated by users are connected. The user uses the terminal device 201, 202 or 20n to purchase or sell a product. The product recommendation device 100 receives information and/or the like on products purchased by users through the Internet 300 from the terminal devices 201, 202 to 20n of a plurality of users and recommends a predetermined product to the users of the terminal devices 201, 202 to 20n at a suitable timing.

A typical information processing device 400 will be described in which the product recommendation device 100 according to an embodiment of the present invention is realized.

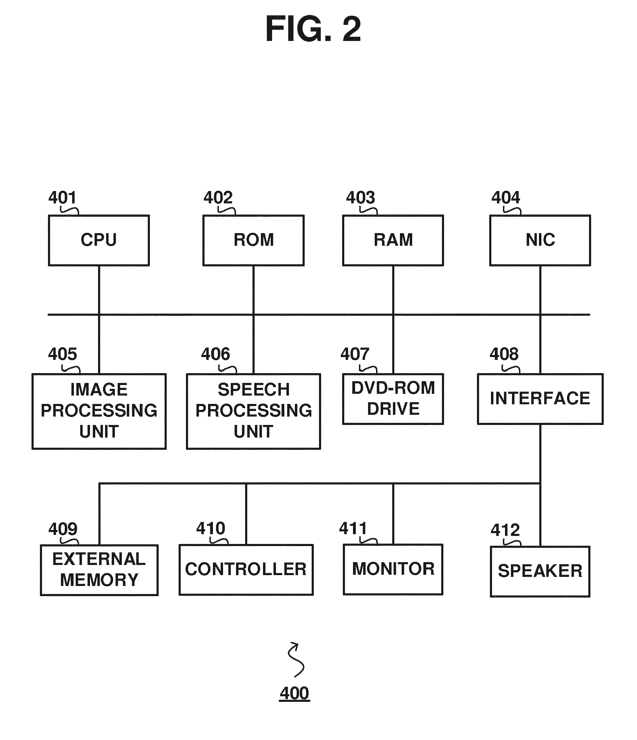

The information processing device 400 includes, as illustrated in FIG. 2, a CPU (central processing unit) 401, a ROM (read only memory) 402, a RAM (random access memory) 403, a NIC (network interface card) 404, an image processing unit 405, a speech processing unit 406, a DVD-ROM (digital versatile disc ROM) drive 407, an interface 408, an external memory 409, a controller 410, a monitor 411 and a speaker 412.

The CPU 401 that controls the entire operation of the information processing device 400, is connected to each of the components, and sends to and receives from each of the components control signals and data.

The ROM 402 stores an IPL (initial program loader) that is executed immediately after power-on, and by executing the IPL, a predetermined program is read out to the RAM 403, thereby starting execution by the CPU 401. The ROM 402 stares an operating system program and various data that are necessary for controlling the entire operation of the information processing device 400.

The RAM 403 temporarily stores data and programs and keeps a program and data read out from a DVD-ROM and other data necessary for communication.

The NIC 404 is used for connecting the information processing device 400 to a computer communication network such as the Internet 300 and is composed of, for example, what is in compliance with a 10BASE-T/100BASE-T standard used for establishing a LAN (local area network), an analog modem for connecting to the Internet through a phone line, an ISDN (integrated services digital network) modem, an ADSL (asymmetric digital subscriber line) modem, a cable modem for connecting to the Internet through a cable television circuit and/or the like, as well as an interface (not shown) intermediating between any of them and the CPU 401.

The image processing unit 405 processes data read from a DVD-ROM and/or the like by an image arithmetic processor (not shown) in the CPU 401 or the image processing unit 405, and then records the processed data on a frame memory (not shown) in the image processing unit 405. The image information recorded on the frame memory is converted to video signals at a predetermined synchronizing time and then output to the monitor 411, thereby allowing for various image displays.

The speech processing unit 406 converts speech data readout from a DVD-ROM and/or the like to analog speech signals, which then are output from the speaker 412 connected to the speech processing unit 406. Under control of the CPU 401, the speech processing unit 406 generates sounds to be emitted during progress of processing by the information processing device and causes the speaker 412 to output a speech corresponding to the sounds.

A DVD-ROM loaded into the DVD-ROM drive 407 stores, for example, a program for realizing the product recommendation device 100 according to an embodiment. Under control of the CPU 401, the DVD-ROM drive 407 performs read-out processing on a DVD-ROM loaded thereto to read out a necessary program and data, which are temporarily stored in the RAM 403 and/or the like.

The external memory 409, controller 410, monitor 411 and speaker 412 are removably connected to the interface 408.

The external memory 409 rewritably stores data relating to a user's personal information, and/or the like.

The controller 410 receives operation inputs performed during various setups of the information processing device 400. A user of the information processing device 400 performs instruction inputs via the controller 410 to record these data on the external memory 409, as needed.

The monitor 411 displays data outputted from the image processing unit 405 to the user of the information processing device 400.

The speaker 412 presents speech data output from the speech processing unit 406 to the user of the information processing device 400.

In addition, the information processing device 400 may be configured to perform the same function as that of the ROM 402, RAM 403, external memory 409, DVD-ROM loaded into the DVD-ROM drive 407 and/or the like using an external mass storage device such as a hard disk and/or the like.

A functional configuration of a product recommendation device 100 according to Embodiments 1 to 3 realized in the information processing device 400 will be described with reference to FIGS. 1 to 17. By turning on the information processing device 400, a program is executed to cause the information processing device 400 to function as the product recommendation device 100 according to the Embodiments, thereby realizing the product recommendation device 100 according to Embodiments 1 to 3.

(Embodiment 1)

A product recommendation device 100 according to Embodiment 1 uses information on an amount of time that is assumed to be used by an average user of a product and information on an interval between purchases of products, thereby to estimate a date and time when a user finishes using a product and recommend a predetermined product on the estimated date and time passed.

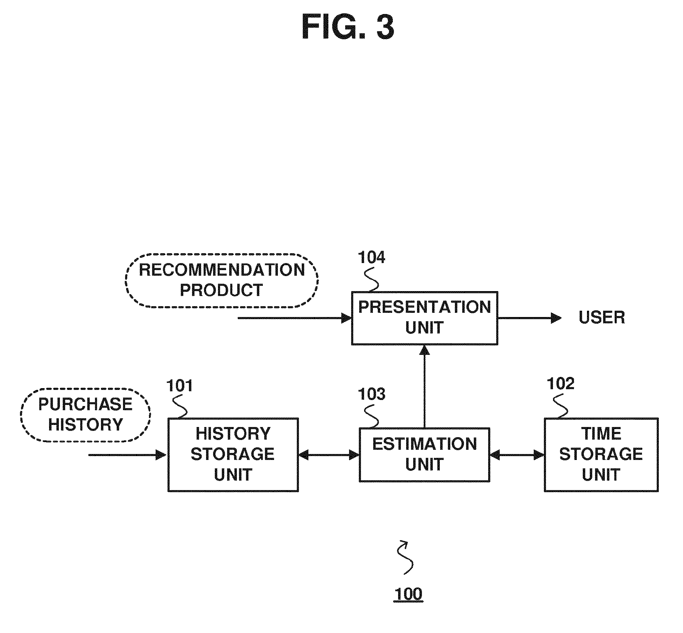

The product recommendation device 100 according to Embodiment 1, as illustrated in FIG. 3, is composed of a history storage unit 101, a time storage unit 102, an estimation unit 103 and a presentation unit 104.

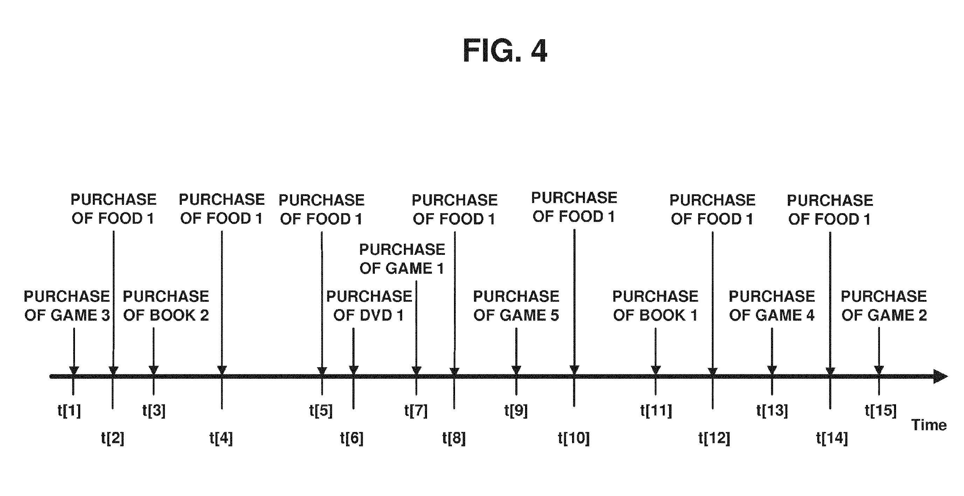

A function of each unit will be described using as an example a case where a user X performs a purchase activity as illustrated in FIG. 4.

The history storage unit 101 stores history information that includes a user identifier of each user who purchased any of products included in the predetermined product group, the purchased product, and a purchase date and time of the product.
Accordingly, the RAM 403 or the external memory 409 functions as the history storage unit 101.

In this specification, a product group means, for example, "Food", "Game", "Book", "DVD" and/or the like, that is, a category of products of which usage tendency of a user is the same; and the predetermined product group is a category of products in which there is a low possibility of repeatedly purchasing the same product. As for products included in the predetermined product group, start of usage and end of usage can be specified. That is, since a product such as "water" and "rice" included in "Food" is repeatedly purchased, it does not belong to the predetermined product group. Meanwhile, since, in the product group such as "Game", "Book", or "DVD", there is a low possibility of repeatedly purchasing the same product, the group is deemed to be the predetermined product group. A product included in the product group of "Book" is, for example, a product such as "a novel" and "a magazine" that has start of usage (start of reading) and end of usage (end of reading). Meanwhile, although a product such as "a dictionary" also belongs to the product group of "Book", it is common that a dictionary is repeatedly and continuously used, and therefore end of usage cannot be specified. Accordingly, such a product is excluded from products in the product group of "Book".

Specifically, the history storage unit 101 stores a table (hereinafter referred to as "a history table 101a") in which a user ID 101a1 of a user who purchased a product, a product group 101a2 to which the product purchased by the user belongs, the purchased product 101a3 (p[i] (i = 1 to N, N: an arbitrary number)), and a purchase date and time 101a4 (t[i] (i = 1 to N)) are associated with one another and registered. A purchase history registered in the history table 101a relates to a product that belongs to the predetermined product group; and a purchase history of a product that belongs to a product group other than the predetermined product group is not registered.

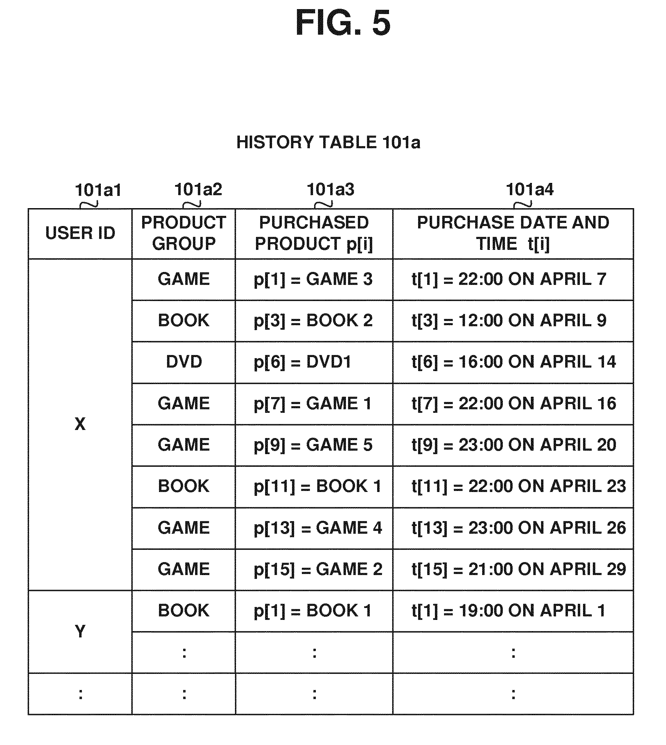

FIG. 5 illustrates an example of a history table 101a in the case where a user X (a user ID thereof is "X") performs a purchase activity illustrated in FIG. 4.
The user X purchased 15 products p[i] (i = 1 to 15), eight of which are products of the predetermined product group ("Game", "Book" and "DVD"). Products registered in the history table 101a are products in a group, such as "Game", "Book" or "DVD", that has a low possibility of repeatedly purchasing the same product, and a product such as food that is regularly and periodically purchased is not registered in the history table 101a. Accordingly, a purchase history of "food 1" is not registered in the history table 101a. If the user X purchases a product "a game 3" in the predetermined product group at 22:00 on April 7, a user ID "X", a product group "Game" to which the game 3 belongs, a product "game 3", and a purchase date and time "22:00 on April 7" are associated with one another and registered in the history table 101a. Similarly, a purchase history for a product that belongs to the predetermined product group is registered in the history table 101a. In the history table 101a, a purchase history of a user other than the user X is also registered, as with the user X.

The time storage unit 102 stores, for each of products included in the predetermined product group, an assumed time that is assumed to be required from start of usage of the product until end of usage thereof.
Accordingly, the RAM 403 or the external memory 409 functions as the time storage unit 102.

The assumed time is, for example, an amount of time required from start of usage by an average user of a product until end of usage thereof (hereinafter referred to as "average usage time"). The average usage time is, for example, an amount of time required by an average user to beat a game that is provided by a manufacture of the game product or an amount of time required by an average user to finish a book that is provided by a publisher of the book. Alternatively, an average usage time may be for example, an amount of time obtained by averaging periods from purchase of a product until purchase of another product in the same product group by other users on the product recommendation device 100, or an amount of time obtained by averaging periods from purchase of a product until later sale of the product by other users on the product recommendation device 100. Hereinafter, an assumed time stored in the time storage unit 102 will be described as the average usage time.

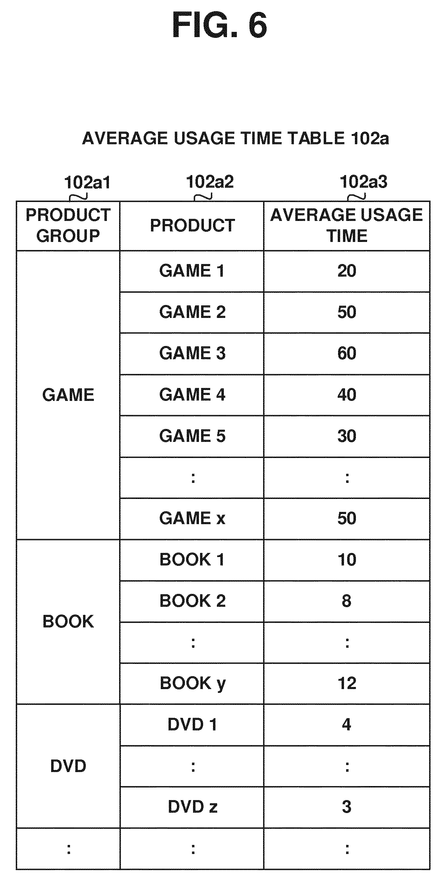

Specifically, the time storage unit 102 stores a table (hereinafter referred to as "average usage time table 102a") to which a predetermined product group 102a1, a product 102a2 included in the product group 102a1, and an average usage time 102a3 of the product are associated with one another and registered. An example of the average usage time table 102a is illustrated in FIG. 6. In the average usage time table 102a, an average usage time 102a3 is registered for each of x pieces of products belonging to a product group "Game", that is, "game 1" to "game x", each of y volumes of products belonging to a product group "Book", that is, "book 1" to "book y", each of z pieces of products belonging to a product group "DVD", that is, "DVD 1" to "DVD z" and so on. For example, an average usage time "20" of a product "game 1" indicates that an average user takes 20 hours to beat the product "game 1". In the case where a product is a book, an average usage time indicates an amount of time required by an average user to finish reading the book, and in the case where a product is a DVD, an average usage time indicates an amount of time required by an average user to finish watching the DVD.

The estimation unit 103 acquires, from the history information stored in the history storage unit 101, history information associated with a user identifier of each user who receives recommendation of a product (hereinafter referred to as "recommendation-receiving user"), determines, from the acquired history information, a usage time required from start of usage by the recommendation-receiving user of a product other than a product most recently purchased by the recommendation-receiving user until end of usage thereof, and estimates a date and time when the recommendation-receiving user finishes using the most recently purchased product (hereinafter referred to as "usage-end date and time") on the basis of the determined usage time and an assumed time on the product associated with the acquired history information, the assumed time being stored in the time storage unit 102.
Accordingly, the CPU 401 functions as the estimation unit 103.

Hereinafter, a method will be described in which the estimation unit 103 estimates a usage-end date and time of a product P[n] (n: an arbitrary number) most recently purchased by the recommendation-receiving user.

First, the estimation unit 103 extracts, from history information recorded in the history table 101a, history information on a product group to which a product most recently purchased by the recommendation-receiving user belongs, sorts the extracted history information in order of purchase date and time, and temporarily stores the sorted history information in the RAM 403. Hereinafter, the sorted table will be referred to as "recommendation-receiving user history table 103a". In the recommendation-receiving user history table 103a, a user ID 103a1 of the recommendation-receiving user, a product group 103a2 to which a product purchased by the user belongs, the purchased product 103a3 (P[i] (i = 1 to n)), and a purchase date and time 103a4 (T[i] (i = 1 to n)) are associated with one another and registered. The estimation unit 103 also refers to the average usage time table 102a to determine an average usage time A[i] (i = 1 to n) of the purchased product P[i] (i = 1 to n). The determined average usage time A[i] (i = 1 to n) is registered as an average usage time 103a5 of the recommendation-receiving user history table 103a.

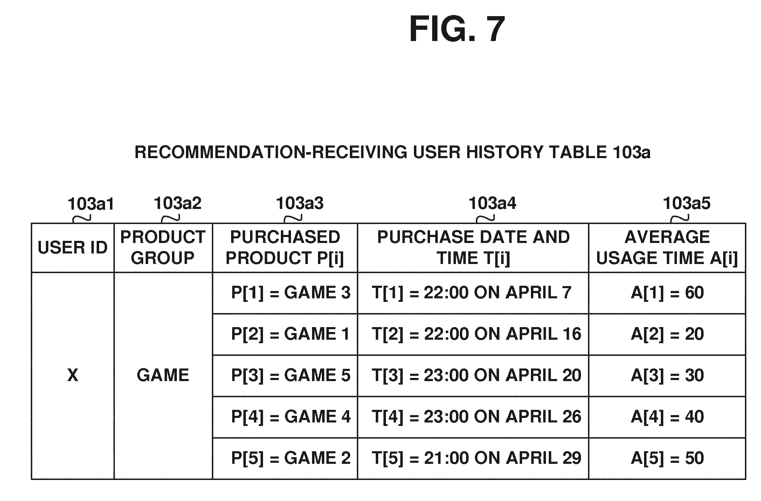

FIG. 7 illustrates an example of a recommendation-receiving user history table 103a.
For example, referring to a recommendation-receiving user as a user X, and a usage-end date and time of a purchased product "game 2" will be determined based on the history table 101a in FIG. 5. In this case, the estimation unit 103 extracts, from the history table 101a in FIG. 5, history information that is associated with the user X and a product group "Game", and sorts the extracted history information in order of purchase date and time, as illustrated in the recommendation-receiving user history table 103a of FIG. 7. Next, referring to the average usage time table 102a in FIG. 6, the estimation unit 103 determines an average usage time A[1] (60 hours) of a purchased product P[1] (game 3), an average usage time A[2] (20 hours) of a product P[2] (game 1), an average usage time A[3] (30 hours) of a product P[3] (game 5), an average usage time A[4] (40 hours) of a product P[4] (game 4) and an average usage time A[5] (50 hours) of a product P[5] (game 2), all of the products belonging to a product group "Game", and registers all of the average usage time in the recommendation-receiving user history table 103a of FIG. 7.

Next, the estimation unit 103 determines an interval between purchases T[i+1] - T[i] (i = 1 to n-1) of products P[i] (i = 1 to n-1) other than a product P[n] most recently purchased by the recommendation-receiving user. Generally, if after purchase of a product P[i], a product P[i+1] that belongs to the same product group as that of the product P[i] is purchased, it is deemed that usage of the product P[i] has finished. For example, if, after purchase by the user X of a product "game 3", the user X purchases "game 1" that belongs to the same product group as that of "game 3", it is deemed that the user X has beaten "game 3" or becomes bored with "game 3" and purchases the new "game 1". Accordingly, in the present embodiment, a purchase date and time T[i+1] is deemed as a date and time when usage of the product P[i] has finished, and an interval between purchases T[i+1] - T[i] is deemed as an amount of time required by the user to finish using the product P[i].

The estimation unit 103 determines a ratio $c[i] = (T[i+1] - T[i])/A[i]$ (hereinafter referred to as "usage time ratio") between an amount of time T[i+1] - T[i] (i = 1 to n-1) required by the user to finish using the product P[i] (i = 1 to n-1) (hereinafter referred to as "usage time") and an amount of time A[i] (i = 1 to n-1) required by an average user to finish using the product P[i] (i = 1 to n-1) (average usage time). A usage time ratio c[i] (i = 1 to n-1) indicates that the greater a usage time ratio c[i] becomes, the more time the recommendation-receiving user takes to finish using the product, compared with an average user. The average usage time A[i] (i = 1 to n) of the product P[i] (i = 1 to n) is often an amount of time required to finish using the product P[i] (i = 1 to n) when the product is continually used, whereas a usage time T[i+1] - T[i] is an interval between purchases. Therefore, a usage time ratio c[i] (i = 1 to n-1) is generally greater than one.

In the example of FIG. 7, the estimation unit 103 determines a usage time T[2] - T[1] (= 216 hours) of a product P[1], a usage time T[3] - T[2] (= 97 hours) of a product P[2], a usage time T[4] - T[3] (= 144 hours) of a product P[3], and a usage time T[5] - T[4] (= 70 hours) of a product P[4]. Then, the estimation unit 103 determines a usage time ratio c[1] (= 3.60) of a product P[1], a usage time ratio c[2] (= 4.85) of a product P[2], a usage time ratio c[3] (= 4.80) of a product P[3], and a usage time ratio c[4] (= 1.75) of a product P[4], based on the determined usage time T[i+1] - T[i] (i = 1 to n-1) and the average usage time A[i] (i = 1 to n-1).

Next, the estimation unit 103 determines a usage time ratio c[n] between a usage time (T[n+1] - T[n]) of the most-recently purchased product P[n], and an average usage time A[n] of the product. Since a date and time when usage of the product P[n] is finished, that is, a purchase date and time T[n+1] of a new product P[n+1] is not a measured value, c[n] is estimated based on the determined c[i] (i = 1 to n-1). In the present embodiment, assuming that the usage time ratio c[i] (i = 1 to n-1) determined from an older purchase history less contributes to c[n], c[n] is determined as follows:

$$c[n] = \Sigma_{i=1}^{n-1} c[i] \times w^{n-i-1} / \Sigma_{i=1}^{n-1} w^{n-i-1} \dots \text{Expression } 1$$

where w is a number greater or equal to zero and less or equal to one, and can be arbitrarily set.
For example, in the example (n = 5) of FIG. 7, assuming that w = 0.95, it follows that c[5] = 3.71.

Then the determined c[n] is used to determine a usage-end date and time T[n+1] of a product P[n] as follows:

$$T[n+1] = T[n] + A[n] \cdot c[n] \dots \text{Expression } 2$$

For example, in the example in FIG. 7, since A[5]·c[5] = 185.5 hours, a usage-end date and time T[6] of a product P[5] (game 2) is determined as "14: 30 on May 7".

The presentation unit 104 selects a product other than the product most recently purchased by a recommendation-receiving user from a product group of the most recently purchased product and presents a message recommending the other selected products to the recommendation-receiving user (hereinafter referred to as "product recommendation message") at the date and time estimated by the estimation unit 103.
Accordingly, the CPU 401, image processing unit 405 and monitor 411 function as the presentation unit 104.

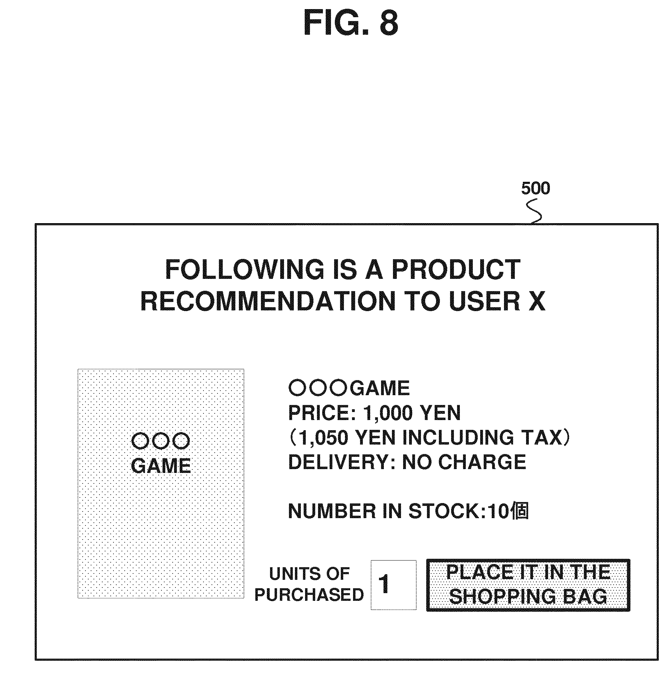

For example, when a usage-end date and time T[n+1] estimated by the estimation unit 103 is reached, the presentation unit 104 displays on the monitor 411 an image 500 (FIG. 8) showing information on a product that belongs to the same product group as that of a product P[n] purchased by the user and is suitable to be recommended to the user X. When the estimated usage-end date and time is reached, the image 500 may be sent to a preliminarily registered e-mail address of the user X. Alternatively, after the estimated usage-end date and time is reached, the user's login to a purchase site of a product and/or the like may cause a browser to display the image 500.

A way to select a product to recommend is arbitrary. A product to recommend may be randomly selected from products that belong to the product group of the product P[n] and were not purchased in the past. By judging the recommendation-receiving user's preference based on the purchase history of the user, a product that has the highest possibility to be purchased may be selected as a product to be recommended. Alternatively, the most popular product may be selected as a product to be recommended.

In the present embodiment, the predetermined product group is described using contents such as "Game", "Book", "DVD" and/or the like as an example, but the predetermined product group is not limited to these contents. For example, the predetermined product group may be "home appliances" such as a refrigerator, "automobiles" and/or the like of which durable years are decided. In this case, the durable years can be used as the average usage time.

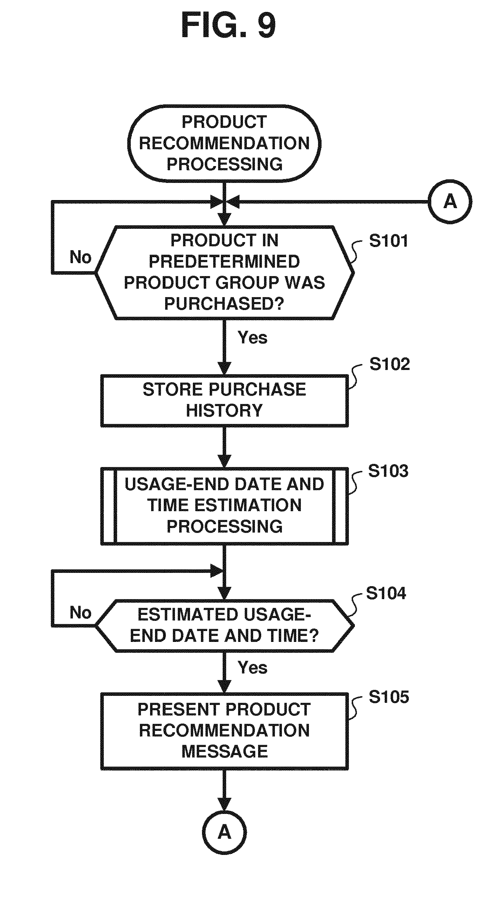

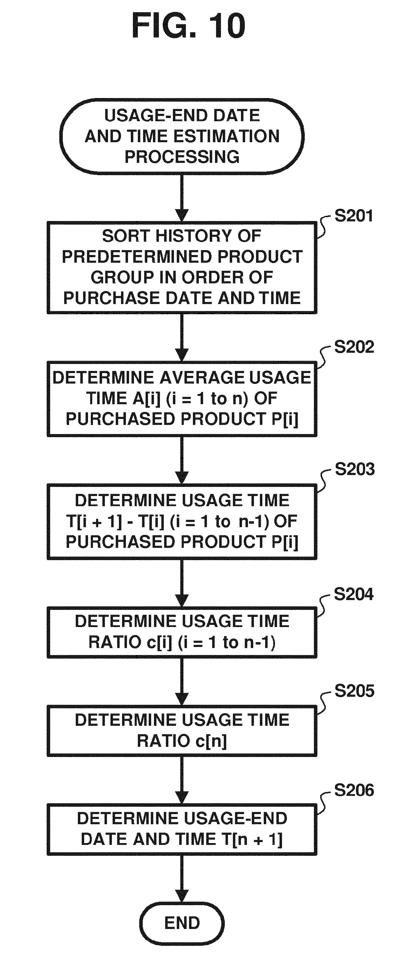

Next, operation performed by each unit of the product recommendation device 100 will be described with reference to flow charts in FIGS. 9 and 10. When the product recommendation device 100 is turned on, the CPU 401 starts product recommendation processing shown in the flow chart in FIG. 9. Hereinafter, referring to the recommendation-receiving user as a user X, a case where the user X performs the purchase activity shown in FIGS. 4 and 5 will be described as an example.

The CPU 401 determines whether a product in a predetermined product group was purchased (Step S101). If the CPU 401 determines that the product was purchased (Step S101; Yes), a user ID of a user who purchased the product, a product group to which the purchased product belongs, the purchased product p[N] and a purchase date and time t[N] are associated with one another and registered in the history table 101a (Step S102). Meanwhile, if the CPU 401 determines that the product in the predetermined product group has not been purchased (Step S 101; No), the CPU 401 will stand by. For example, if the user X purchases a product "game 2" at 21:00 on April 29, the CPU 401 registers a user ID "X", a product group "Game", a purchased product "game 2" and a purchase date and time "21:00 on April 29" to the history table 101a. Meanwhile, if the user X purchases "food 1", the CPU 401 will stand by.

When the purchase history is stored in the history storage unit 101(Step S 102), next, the estimation unit 103 starts a usage-end date and time estimation processing (Step S103 in FIG. 10).

First, the estimation unit 103 extracts, from histories recorded in the history table 101a, histories of a product group to which a product most recently purchased by the recommendation-receiving user belongs, and sorts the extracted histories in order of purchase date and time (Step S201). That is, the estimation unit 103 extracts, from histories recorded in the history table 101a in FIG. 5, the histories of the product group "Game", and sorts the extracted histories in order of purchase date and time, as illustrated in the recommendation-receiving user history table 103a in FIG. 7.

Next, the estimation unit 103 determines an average usage time A[i] (i = 1 to n) of purchased products (Step S202). For example, the estimation unit 103 refers to the average usage time table 102a in FIG. 6 and determines an average usage time of each of purchased products "game 3", "game 1", "game 5", "game 4" and "game 2" in FIG. 7 to be "60 hours", "20 hours", "30 hours", "40 hours" and "50 hours", respectively.

Next, the estimation unit 103 determines a usage time T[i+1] - T[i] (i = 1 to n-1) during which the user uses purchased products P[i] (i = 1 to n-1) (Step S203). For example, the estimation unit 103 determines a usage time of purchased products "game 3", "game 1", "game 5" and "game 4" in FIG. 7 to be "216 hours", "97 hours", "144 hours" and "70 hours", respectively.

Next, the estimation unit 103 determines a usage time ratio c[i] = {T[i+1] - T[i]}/A[i] (i = 1 to n-1) for a product P[i] (i = 1 to n-1) registered in the recommendation-receiving user history table 103a (Step S204). For example, the estimation unit 103 determines, based on values determined in Step S202 and S203, a usage time ratio of purchased products "game 3", "game 1", "game 5" and "game 4" to be "3.60", "4.85", "4.80" and "1.75", respectively.

Next, the determined usage time ratio c[i] (i = 1 to n-1) are substituted into the above Expression 1 thereby to determine a usage time ratio c[n] of the most recently purchased product P[n] (Step S205). For example, assuming that w = 0.95, the estimation unit 103 substitutes a usage time ratio c[i] (i = 1 to 4) of a purchased product that was determined in Step S204 into Expression 1 to determine c[5] = 3.71.

The estimation unit 103 substitutes the determined A[n] and c[n] into the above Expression 2 to determine a usage-end date and time T[n+1] of P[n] (Step S206). For example, the estimation unit 103 substitutes an average usage time A[5] determined in Step S202 and a usage time ratio c[5] determined in Step S205 into Expression 2 to determine a usage-end date and time T[6] of "game 2" in FIG. 4 to be "14:30 on May 7".

The order of the flow chart in FIG. 10 is one example, and the order is not limited to this. For example, processing to determine an average usage time A[i] (i = 1 to n) may be performed at any point between Step S201 and Step S205.

When a usage-end date and time T[n+1] of P[n] is determined by the usage-end date and time estimation processing (Step S103 in FIG. 10), the presentation unit 104 determines whether the current time reaches the estimated usage-end date and time (Step S104). If the presentation unit 104 determines that the current time has reached the estimated usage-end date and time (Step S104; Yes), the presentation unit 104 presents a product recommendation message recommending the predetermined product to the user (Step S105). For example, the presentation unit 104 sends, for example, the image 500 as illustrated in FIG. 8 to an e-mail address of the user X. Meanwhile, if the current time has not reached the estimated usage-end date and time (Step S104; No), the presentation unit 104 will stand by until the current time reaches the estimated usage-end date and time. After the presentation unit 104 presents the product recommendation message, processing returns to Step S101 and processing is repeated until a manager and/or the like of the product recommendation device 100 instructs the processing to stop.

According to the present embodiment, for a type of product for which an amount of time required to finish usage varies according to each purchased product, a date and time when a user finishes using a product is estimated, and when the estimated date and time is reached, a product is recommended, thereby enabling a product to be recommended to the user at a suitable timing.


(Embodiment 2)

A product recommendation device 100 according to Embodiment 2 estimates a date and time when a user finishes using a product on the basis of information on an amount of time assumed to be required by an average user to use a product, information on an interval between purchases of products, and a season in which a product is purchased, and recommends the predetermined product when the estimated date and time is reached.

The product recommendation device 100 according to Embodiment 2 is composed of the history storage unit 101, the time storage unit 102, the estimation unit 103 and the presentation unit 104, as illustrated in FIG. 2. The history storage unit 101, time storage unit 102 and presentation unit 104 according to the present embodiment have the same functions as those of Embodiment 1. The estimation unit 103 that has a function different from that of Embodiment 1 will be described. Hereinafter, a season includes not only a category of "spring", "summer", "autumn" and "winter" but also a predetermined period such as "year-end through New Year", "summer holidays" and/or the like.

The estimation unit 103 acquires, from history information stored in the history storage unit 101, history information associated with a user identifier of a recommendation-receiving user, determines, from the acquired history information, a usage time required from start of usage by the recommendation-receiving user of a product other than a product most recently purchased by the recommendation-receiving user until end of usage thereof, and estimates a usage-end date and time of the product most recently purchased by the recommendation-receiving user on the basis of the determined usage time, an assumed time on the product associated with the acquired history information, the assumed time being stored in the time storage unit 102, and a seasonal coefficient. A seasonal coefficient Q is a coefficient to multiply a usage time ratio $c[n]$ by in the above Expression 2 and a value defined by a purchase date and time $T[n]$. It is estimated that the smaller the seasonal coefficient becomes, the earlier a usage-end date and time $T[n+1]$ comes. Accordingly, the CPU 401 functions as the estimation unit 103.

It is generally considered that the user has more time to use games and books on holidays than on non-holidays. That is, it is considered that a usage time for a user to use a product varies according to a calendar. Holidays of a user vary according to the user's attribute. For example, if the user is an office worker, the user's holidays are usually year-end through New Year and national holidays. If the user is a student, the user has summer holidays, spring holidays and/or the like in addition to these holidays. A seasonal coefficient is for reflecting such a variation of a usage time according to a calendar in determining the user's usage time $T[i+1] - T[i]$ ($i$ = 1 to n-1).

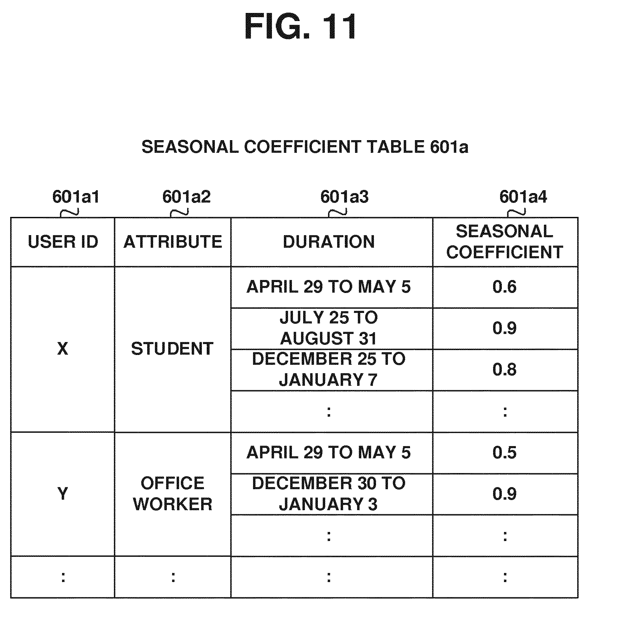

With respect to a seasonal coefficient, a table to associate a user ID 601a1, an attribute 601 a2, a period 601 a3 and a seasonal coefficient 601 a4 with one another and register them (hereinafter referred to as "seasonal coefficient table 601a") is preliminarily provided. FIG. 11 illustrates an example of the seasonal coefficient table 601a. If the user X is a student, a usage time is considered to change (increase) during a period of national holidays (April 29 through May 5), summer holidays (July 25 through August 31), winter holidays (December 25 through January 7) and/or the like, compared with other periods. Accordingly, a seasonal coefficient less than or equal to one is associated with these periods and registered. If the user Y is an office worker, a usage time is considered to change (increase) during national holidays (April 29 through May 5) and year-end through New Year holidays (December 30 to January 3). Accordingly, a seasonal coefficient of less than or equal to one is associated with these periods and registered.

The estimation unit 103 according to the present embodiment determines a usage-end date and time $T[n+1]$ of the product $P[n]$ most recently purchased by the recommendation-receiving user as follows:

$$T[n+1] = T[n] + A[n] \cdot Q \cdot c[n] \ldots \text{Expression 3}$$

where a seasonal coefficient Q is determined from a purchase date and time $T[n]$ of a product $P[n]$ by referring to the seasonal coefficient table 601 a. For example, since a purchase date and time $T[5]$ of a product "game 2" is "21:00 on April 29" as illustrated in the example in FIG. 7, the seasonal coefficient Q is determined to be "0.6". In the case where a usage time ratio $c[5]$ = 3.71 has been determined, it follows that $A[5] \cdot Q \cdot c[5]$ = 111.3 hours, and the estimation unit 103 determines a usage-end date and time $T[6]$ of "game 2" ($P[5]$) to be "12:18 on May 4".

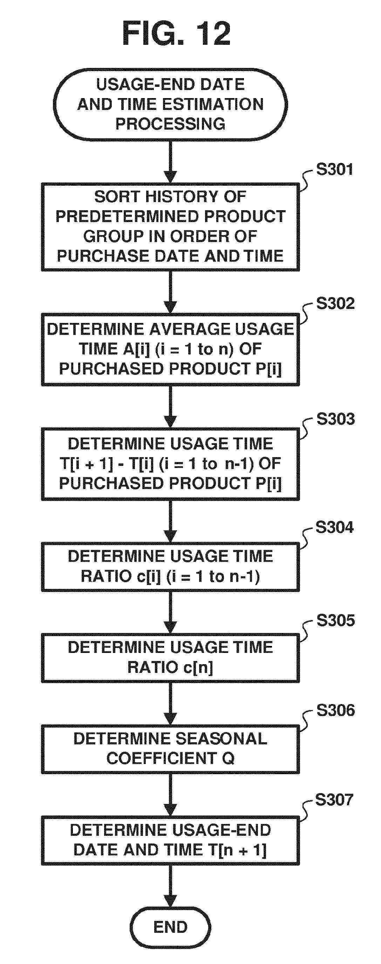

Hereinafter, operation performed by each unit of the product recommendation device 100 according to the present embodiment will be described. The product recommendation device 100 according to the present embodiment performs processing different from that of Embodiment 1 in a usage-end date and time estimation processing and performs the same processing as illustrated in the flow chart in FIG. 9 in processing other than the usage-end date and time estimation processing. Hereinafter, the usage-end date and time estimation processing in which a different processing is performed will be described with reference to a flow chart in FIG. 12. Since Step S301 to Step S305 in the flow chart of FIG. 12 are the same as Step S201 to Step S205 in the flow chart of FIG. 10, the explanation of these steps will be left out.

In Step S305 a usage time ratio $c[n]$ is determined, and then the estimation unit 103 determines a seasonal coefficient Q (Step S306). For example, if a purchase date and time $T[5]$ of a most recently purchased product "game 2" is "21:00 on April 29" as illustrated in the example in FIG. 7, the estimation unit 103 refers to the seasonal coefficient table 601a in FIG. 11 to determine the seasonal coefficient Q to be "0.6".

The estimation unit 103 substitutes an average usage time $A[n]$ determined in Step S302, a usage time ratio $c[n]$ of a product $P[n]$ determined in Step S305, and the seasonal coefficient Q determined in Step S306 into the above Expression 3 to determine a usage-end date and time $T[n+1]$ of the product $P[n]$ (Step S307). For example, assuming that $A[5] = 50$ and $c[5] = 3.71$, a usage-end date and time $T[6]$ of a product "game 2" ($P[5]$) is determined to be 12:18 on May 4.

Processing to determine the seasonal coefficient Q may be performed at any timing before Step S307.

According to the present embodiment, taking a variation of the user's usage time according to a calendar into consideration, a date and time when the user finishes using a purchased product can be estimated and therefore purchase of a product can be encouraged to the user at a suitable timing.

(Embodiment 3)

A product recommendation device 100 according to Embodiment 3 uses information on an amount of time that is assumed to be required by an average user to use a product, as well as information on an interval between purchase and sales of a product or an interval between purchases of products to estimate a date and time when a user finishes using a product, and recommend the predetermined product when the estimated date and time is reached.

The product recommendation device 100 according to Embodiment 3 is composed of the history storage unit 101, the time storage unit 102, the estimation unit 103 and the presentation unit 104, as illustrated in FIG. 2. The time storage unit 102 and presentation unit 104 according to the present embodiment have the same functions as those of Embodiment 1. Hereinafter, the history storage unit 101 and estimation unit 103 that have different functions from those of Embodiment 1 will be described.

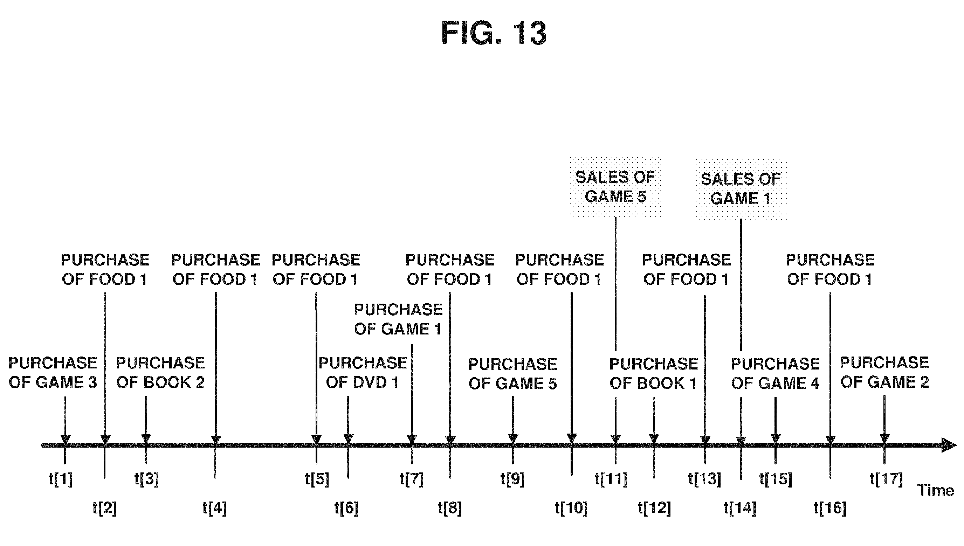

Hereinafter, using, as an example, a case where the user X performs a purchase and sales activity as illustrated in FIG. 13, function of each unit will be described.

The history storage unit 101 stores history information, the history information including a user identifier of each user who purchased any of products included in a predetermined product group, the purchased product, a purchase date and time of the product, and a sales date and time when the purchased product was sold. The predetermined product group is the same as that of Embodiment 1.

Accordingly, the RAM 403 or the external memory 409 function as the history storage unit 101.

Specifically, the history storage unit 101 stores a table (history table 101a) to which a user ID 101a1 of a user who purchased a product, a product group 101a2 to which the product purchased by the user belongs, the purchased product 101a3 ($p[i]$ ($i$ = 1 to N)), a purchase date and time 1 0 1 a4 ($t[j]$ ($j$ = 1 to M, M: an arbitrary number)) and a sales date and time 101a5 ($t[j]$ ($j$ = 1 to M)) are associated with one another and registered. The purchase and sales history registered in the history table 101 a is on a product that belongs to the predetermined product group, and a purchase and sales history of a product that belongs to a product group other than the predetermined product group is not registered.

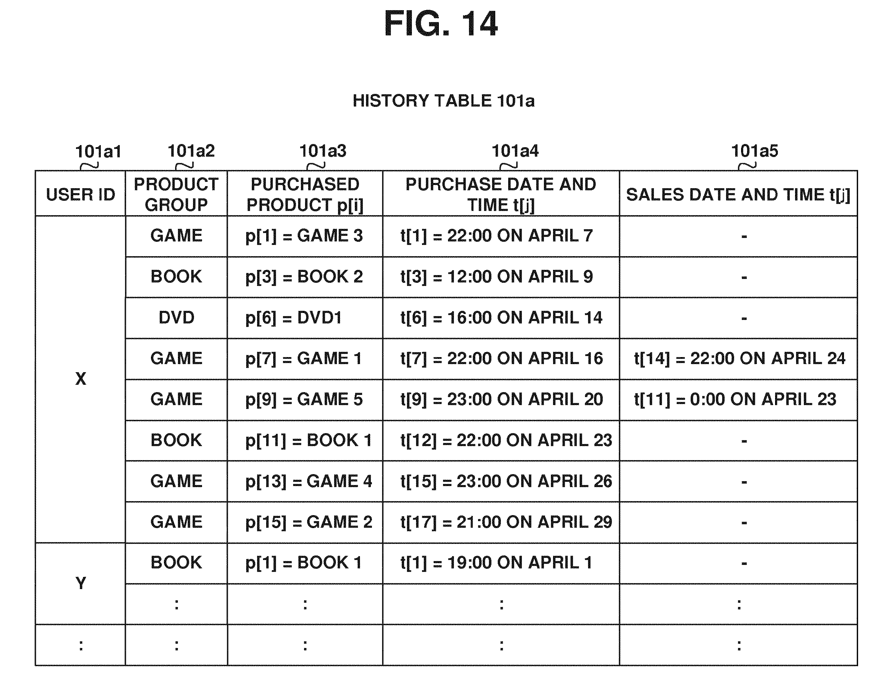

FIG. 14 illustrates an example of the history table 101a in the case where the user X performs the purchase and sales activity in FIG. 13.

The user X purchased 15 products $p[i]$ ($i$ = 1 to 15), and eight of them belong to products in the predetermined product group ("Game", "Book" and "DVD"). Two products ("game 5" and "game 1") of the products in the predetermined product group were sold. For example, since the user "X" purchased the product "game 1" at "22:00 on April 16" and sold the product "game 1" at "22:00 on April 24", an user ID "X", "Game" that is a product group of game 1, the product "game 1", a purchase date and time "22:00 on April 16" and a sales date and time "22:00 on April 24" are associated with one another and registered to in the history table 101a.

Hereinafter, similarly, a purchase history of a product that belongs to the predetermined product group is registered in the history table 101a. In the history table 101a, purchase histories of a plurality of users other than the user X are also registered in the same fashion.

The estimation unit 103 acquires, from history information stored in the history storage unit 101, history information associated with a user identifier of the recommendation-receiving user, determines, from the acquired history information, a usage time required from start of usage by the recommendation-receiving user of a product other than a product most recently purchased by the recommendation-receiving user until end of usage thereof, and estimates a usage-end date and time of the product most recently purchased by the recommendation-receiving user on the basis of the determined usage time and an assumed time on a product associated with the acquired history information, the assumed time being stored in the time storage unit 102.

Accordingly, the CPU 401 functions as the estimation unit 103.

Hereinafter, a method will be described in which the estimation unit 103 estimates a usage-end date and time of a product P[n] most recently purchased by the recommendation-receiving user.

First, the estimation unit 103 extracts, from histories registered in the history table 101a, the histories of the product group to which the product most recently purchased by the recommendation-receiving user belongs, sorts the extracted histories in order of purchase date and time, and temporarily stores the sorted histories in the RAM 403. Hereinafter, a sorted table will be referred to as "recommendation-receiving user history table 103a". In the recommendation-receiving user history table 103a, a user ID 103a1 of the recommendation-receiving user, a product group 103a2 to which a product purchased by the user belongs, the purchased product 103a3 (P[i] (i = 1 to n)), a purchase date and time 103a4 (T[i] (i = 1 to n)), an average usage time 103a5 (A[i] (i = 1 to n)) determined by referring to the average usage time table 102a, a sales date and time 103a6 (S[i] (i = 1 to n)) when the purchased product was sold are associated with one another and registered.

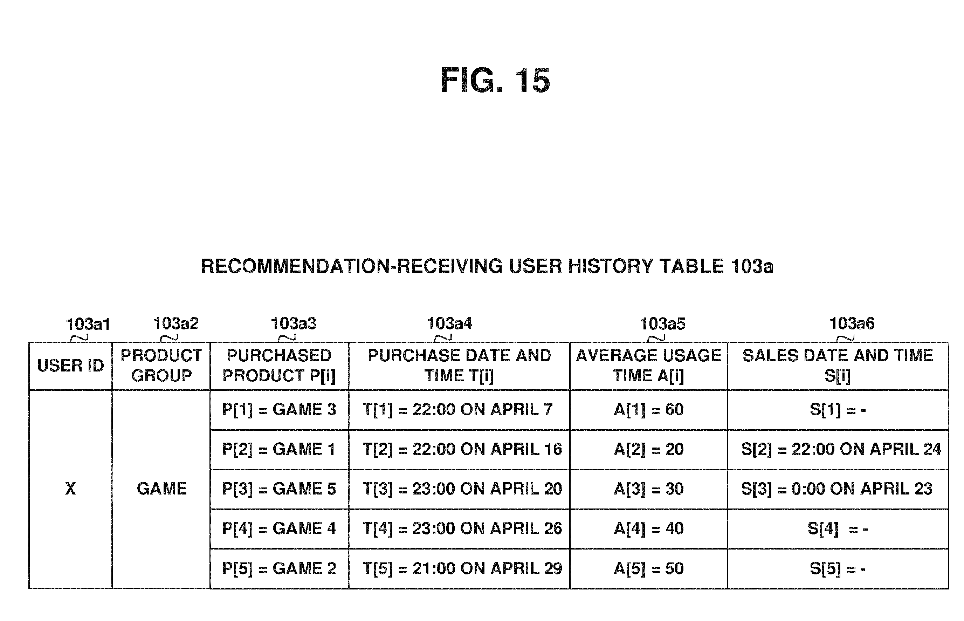

FIG. 15 illustrates an example of the recommendation-receiving user history table 103a.

For example, referring to a recommendation-receiving user as a user X, a usage-end date and time of a purchased product "game 2" is determined based on the history table 101a in FIG. 14. In this case, the estimation unit 103 extracts, from the history table 101a in FIG. 14, histories that are associated with the user X and a product group "Game", and sorts the extracted histories in order of purchase date and time as illustrated in the recommendation-receiving user history table 103a of FIG. 15. Next, referring to the average usage time table 102a in FIG. 6, the estimation unit 103 determines an average usage time A[1] (60 hours) of a purchased product P[1] (game 3), an average usage time A[2] (20 hours) of P[2] (game 1), an average usage time A[3] (30 hours) of P[3] (game 5), an average usage time A[4] (40 hours) of P[4] (game 4) and an average usage time A[5] (50 hours) of P[5] (game 2) that all belong to the product group "Game".

Next, the estimation unit 103 determines an interval S[i] - T[i] (i = 1 to n-1) between purchase and sales of a product P[i] (i = 1 to n-1). Sales of a product P[i] after purchase thereof can be considered that usage of the product P[i] has been finished. For example, sales of a product "game 3" by the user X after purchase thereof can be interpreted as that the user X has beaten "game 3" or becomes bored with "game 3". Accordingly, in the present embodiment, a sales date and time S[i] is deemed to be a date and time when usage of a product P[i] has been finished, and an interval S[i] - T[i] between purchase and sales is deemed to be an amount of time (usage time) required by the user to finish using a product P[i]. If there is no sales history of a product P[i] (i = 1 to n-1), an interval between purchases T[i+1] - T[i] (i = 1 to n-1) is deemed to be a usage time, as illustrated in Embodiment 1.

The estimation unit 103 determines a usage time ratio c[i] = (S[i] - T[i])/A[i] or c[i] = (T[i+1] - T[i])/A[i] of a product P[i] (i = 1 to n-1) of the user.

In the example of FIG. 15, the estimation unit 103 determines a usage time T[2] - T[1] (= 216 hours) of a product P[1], a usage time S[2] - T[2] (= 192 hours) of a product P[2], a usage time S[3] - T[3] (= 49 hours) of a product P[3] and a usage time T[5] - T[4] (= 70 hours) of a product P[4], and determines a usage time ratio c[1] (= 3.60) of the product P[1], a usage time ratio c[2] (= 9.60) of the product P[2], a usage time ratio c[3] (= 1.63) of the product P[3], and a usage time ratio c[4] (= 1.75) of the product P[4].

Next, the estimation unit 103 determines a usage time ratio c[n] between an amount of time (S[n] - T[n] or T[n+1] - T[n]) estimated to be required to finish using a currently purchased product P[n], and an average usage time A[n]. Since a sales date and time S[n] of the product P[n] or a purchase date and time T[n+1] of a new product P[n+1] (a usage-end date and time of the product P[n]) is not a measured value, c[n] is estimated based on the determined c[i] (i = 1 to n-1). c[n] can be determined by substituting c[i] (i = 1 to n-1) into the above Expression 1.

For example, in the example (n = 5) of FIG. 15, assuming that w = 0.95, it determines that c[5] = 4.06.

By using the determined c[n], a usage-end date and time T[n+1] (= S[n]) of the product P[n] is determined from the above Expression 2.

For example, in the example of FIG. 15, since A[5]·c[5] = 203 hours, a usage-end date and time T[6] of a product P[5] (game 2) is determined to be "8:00 on May 8".

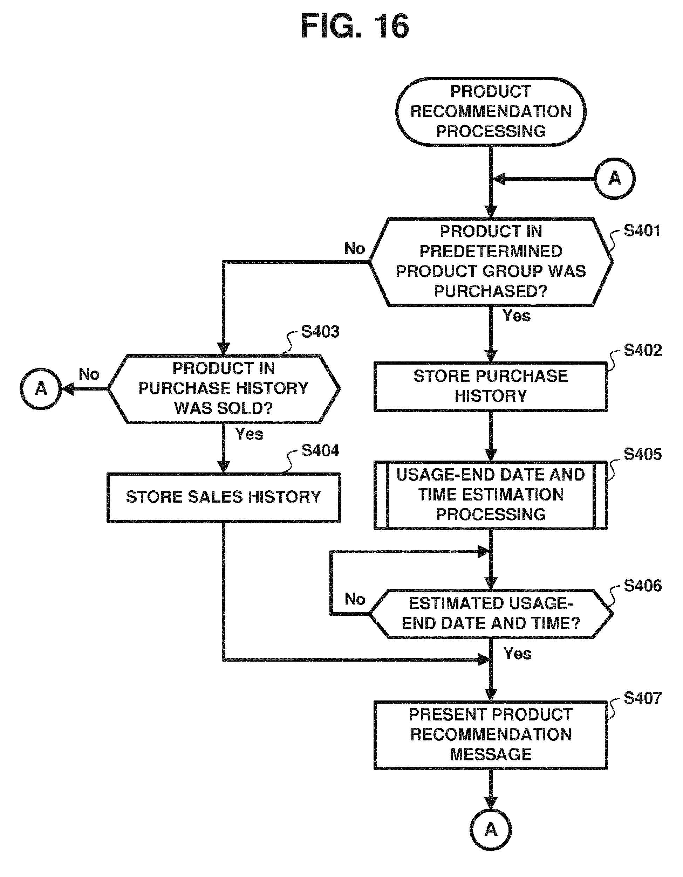

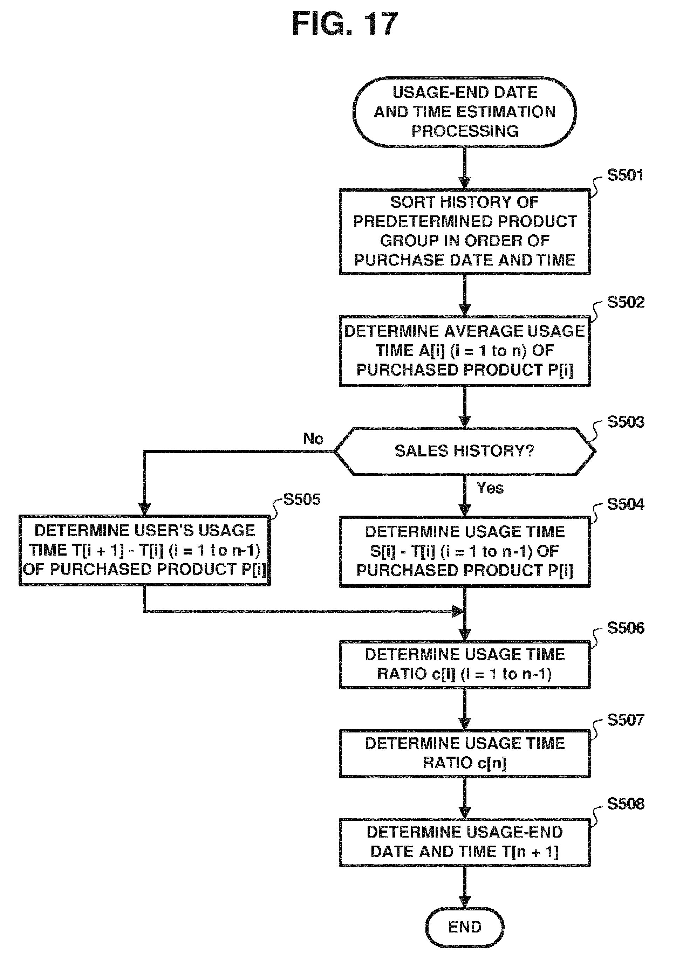

Next, operation performed by each unit of the product recommendation device 100 will be described with reference to flow charts in FIGS. 16 and 17. When the product recommendation device 100 is turned on, the CPU 401 starts a product recommendation processing illustrated in a flow chart of FIG. 16. Referring to a recommendation-receiving user as a user X, a case where the user X performs the purchase and sales activity illustrated in FIGS. 13 and 14 will be described as an example.

The CPU 401 determines whether a product in the predetermined product group was purchased (Step S401). If the CPU 401 determines that the product was purchased (Step S401; Yes), the CPU 401 registers a user ID of a user who purchased the product, a product group to which the purchased product belongs, the purchased product p[N] and a purchase date and time t[M] in the history table 101 a (Step S402). Meanwhile, if the CPU 401 does not determine that the product in the predetermined product group was purchased (Step S401; No), the CPU 401 determines whether any of purchased products p[i] (i = 1 to N) stored in the history storage unit 101 was sold (Step S403). For example, if a product group and product name of the purchased product p[i] correspond to or is similar to a product group and product name of a sold product, it is determined that the purchased product p[i] stored in the history storage unit 101 was sold. If the CPU 401 determines that any of the purchased products p[i] (i = 1 to N) was sold (Step S403; Yes), the CPU 401 associates a sales date and time t[j] (j = 1 to M) with a user ID of a user who purchased the product, a product group to which the purchased product belongs, the purchased product p[i] (i = 1 to N) and a purchase date and time t [i] (i = 1 to M) and registers the sales date and time t[j] (j = 1 to M) in the history table 101 a (Step S404). Then, the CPU 401 presents a product recommendation message recommending a product that belongs to the same product group as that of the sold product (Step S407). Meanwhile, if the CPU 401 does not determine that any of the purchased product p[i] (i = 1 to N) was sold (Step S403; No), the processing returns to Step S401.

For example, as illustrated in FIGS. 13 and 14, if the user X purchases a product "game 2" at 21:00 on April 29, the CPU 401 registers a user ID "X", a product group "Game", a purchased product "game 2" and a purchase date and time "21:00 on April 29" in the history table 101a. If the user X sells a product "game 5" of a product group "Game" at 0:00 on April 23, the CPU 401 determines whether the product "game 5" in a product group "Game" as a purchased product is registered in the history table 101 a. Since the product "game 5" of a product group "Game" is registered in the history table in FIG. 14, the CPU 401 associates the sales date and time "0:00 on April 23" with a user ID "X", a product group "Game", a purchased product "game 5" and a purchase date and time "23:00 on April 20" and registers the sales date and time "0:00 on April 23" in the history table 101a. Then the presentation unit 104 presents a product recommendation message recommending any of products that belong to the product group "Game" to the user X. Meanwhile, if the user X purchases food 1, the CPU 401 causes the processing to return to Step S401 and will stand by.

When the purchase history is stored in the history storage unit 101 (Step S402), the estimation unit 103 starts a usage-end date and time estimation processing (Step S405 in FIG. 17).

First, the estimation unit 103 extracts, from histories recorded in the history table 101a, the history information on product group to which a product most recently purchased by the recommendation-receiving user belongs and sorts the extracted history information in order of purchase date and time (Step S501). That is, the estimation unit 103 extracts, from histories registered in the history table 101 a of FIG. 14, histories of a product group "Game" and sorts the extracted histories in order of purchase date and time, as illustrated in the recommendation-receiving user history table 103a of FIG. 15.

Next, the estimation unit 103 obtains an average usage time A[i] (i = 1 to n) of a purchased product, by referring to the average usage time table 102a (Step S502). For example, the estimation unit 103 refers to the average usage time table 102a in FIG. 6 to obtain an average usage time of each of purchased products "game 3", "game 1", "game 5", "game 4" and "game 2" included in FIG. 15 to be "60 hours", "20 hours", "30 hours", "40 hours" and "50 hours", respectively.

Next, the estimation unit 103 determines whether there is a sales history with respect to purchased products P[i] (i = 1 to n-1) registered in the recommendation-receiving user history table 103a (Step S503). If the estimation unit 103 determines that there is the sales history (Step S503; Yes), a usage time of the purchased product P[i] (i = 1 to n-1) is determined by S[i] - T[i] (i = 1 to n-1) (Step S504). Meanwhile, if the estimation unit 103 determines that there is no sales history (Step S503; No), the usage time of the purchased product P[i] (i = 1 to n-1) is determined by T[i+1] - T[i] (i = 1 to n-1) (Step S505). For example, the estimation unit 103 determines a usage time S[i] - T[i] (i = 2, 3) of each of the purchased products "game 1" and "game 5" included in FIG. 15 to be "192 hours" and "49 hours", respectively and determines a usage time T[i+1] - T[i] (i = 1, 4) of each of the "game 3" and "game 4" included in FIG. 15 to be "216 hours" and "70 hours", respectively.

Next, the estimation unit 103 determines a usage time ratio c[i]= (S[i] - T[i])/A[i] (i = 1 to n-1) or c[i] = (T[i+1] - T[i])/A[i] (i = 1 to n-1) of the product P[i] (i = 1 to n-1) registered in the recommendation-receiving user history table 103a (Step S506). For example, the estimation unit 103 determines, from the values determined in Step S502, Step S504 and Step S505, usage time ratios of the purchased product "game 3", "game 1", "game 5" and "game 4" to be "3.60", "9.60", "1.63" and "1.75", respectively.

Next, the determined usage time ratio c[i] (i = 1 to n-1) is substituted into the above Expression 1 to determine a usage time ratio c[n] of a most recently purchased product P[n] (Step S507). For example, assuming that w = 0.95, the estimation unit 103 substitutes a usage time ratio c[i] (i = 1 to 4) of the purchased product determined in Step S506 into Expression 1 to determine c[5] = 4.06.

The estimation unit 103 substitutes the determined A[n] and c[n] into the above Expression 2 to determine a usage-end date and time T[n+1] (=S[n]) of P[n] (Step S508). For example, the estimation unit 103 substitutes the average usage time A[5] determined in Step S502 and the usage time ratio c[5] determined in Step S507 into Expression 2 to determine a usage-end date and time T[6] of "game 2" in FIG. 13 to be "8:00 on May 8".

The order of the flow chart in FIG. 17 is one example and the order is not limited to this order. For example, processing to determine an average usage time A[i] (i = 1 to n) may be performed at any timing between Step S501 and Step S508.

When the usage-end date and time T[n+1] of P[n] is determined by the usage-end date and time estimation processing (Step S405 in FIG. 17), the presentation unit 104 determines whether a current time reaches the estimated usage-end date and time (Step S406). If the presentation unit 104 determines that the current time has reached the estimated usage-end date and time (Step S406; Yes), the presentation unit 104 presents a product recommendation message recommending the predetermined product to the user (Step S407). For example, the image 500 as illustrated in FIG. 8 is sent to an e-mail address of the user X. Meanwhile, if the current time has not reached the usage-end date and time (Step S406; No), the presentation unit 104 will stand by until the current time reaches the estimated usage-end date and time.

In the present embodiment, in determining a usage time of a user, if there is a sales history in the recommendation-receiving user history table 103a, a sales date and time is preferentially used, but a way to determine the usage time is not limited to this. For example, the estimation unit 103 may compare a sales date and time S[i] and a purchase date and time T[i+1], and use an earlier date and time as a usage-end date and time of a product P[i] to determine a usage time. In the example of FIG. 15, a sales date and time S[2] of a product "game 1" is later than a purchase date and time T[3] of the subsequent product "game 5". Accordingly, a usage-end date and time of the product "game 1" is used as a purchase date and time T[3] thereby to determine a usage time of a product "game 2" to be T[3] - T[2] (= 97 hours). Meanwhile, a sales date and time S[3] of the product "game 5" is earlier than a purchase date and time T[4] of the subsequent product "game 4". Accordingly, a usage-end date and time of the product "game 5" is used as a sales date and time S[3] thereby to determine a usage time of the product "game 5" to be S[3] - T[3] (= 49 hours).

According to the present embodiment, by using a date and time when a user sold a purchased product, a date and time when the user finished using the product is accurately estimated, thereby recommending a product to the user at a suitable timing.

(Embodiment 4)

A product recommendation device 100 according to Embodiment 4 adjusts information on an amount of time assumed to be required by an average user to use a product on the basis of a purchase and sales history of a recommendation-receiving user, uses the adjusted information on an amount of time and information on an interval between purchase and sales of a product or an interval between purchases of products to estimate a date and time when the user finishes using a product, and recommends the predetermined product when the estimated date and time is reached. The product recommendation device 100 according to Embodiment 4 is composed of the history storage unit 101, the time storage unit 102, the estimation unit 103 and the presentation unit 104, as illustrated in FIG. 2. The history storage unit 101, estimation unit 103 and presentation unit 104 in the present embodiment have the same functions as those of Embodiment 3. Hereinafter, the time storage unit 102 having a different function will be described.

The time storage unit 102 stores, for each of products included in a predetermined product group, an assumed time that is assumed to be required from start of usage of the product until end of usage thereof. Among history information, history information including a purchase date and time and a sales date and time is used to determine an interval between the purchase date and time and the sales date and time of a product associated with the history information, and the assumed time on the product stored in the time storage unit 102 is adjusted on the basis of the determined interval.

In the recommendation-receiving user history table 101 a of FIG. 15, a way to adjust an average usage time A[i] (i = 1 to n) in FIG. 6 will be described by using "game 5" of which a purchase date and time and a sales date and time are registered, from history information of a recommendation-receiving user "X", as an example.

For example, an adjusted average usage time A[i] (i = 1 to n) is determined as follows:

$$\alpha A[i] + (1 - \alpha)(S[i] - T[i]) \ \ldots \ \text{Expression 4}$$

where $\alpha$ is an arbitrary number that is greater or equal to zero and less or equal to one. The smaller a value of $\alpha$ becomes, the more the adjusted average usage time is indicated by an interval between purchase and sales of a recommendation-receiving user with respect to a preliminarily-registered average usage time. Hereinafter, let $\alpha$ to be 0.95.

An interval S[3] - T[3] between a purchase date and time and a sales date and time of game 5 (P[3]) is 49 hours. An average usage time A[3] of game 5 is 30 hours. Accordingly, an adjusted average usage time A[3] is determined to be 30.95 hours from Expression 4.

In addition or alternatively, an assumed time of a first product stored in the time storage unit 102 is adjusted based on an interval between a purchase date and time included in history information of the first product and a purchase date and time included in history information on a second product, the second product being most recently purchased among products purchased by the same user of the first product after purchase of the first product.

For example, an adjusted average usage time A[i] (i = 1 to n) is determined as follows:

$$\beta A[i] + (1 - \beta)(T[i+1] - T[i]) \ldots \text{Expression 5}$$

where $\beta$ is an arbitrary constant number that is greater or equal to zero and less or equal to one. The smaller a value $\alpha$ becomes, the more the adjusted average usage time is indicated by an interval between purchases of a recommendation-receiving user with respect to a preliminarily-registered average usage time. Hereinafter, let $\beta$ to be 0.95.

An interval T[2] - T[1] between a purchase date and time T[1] of game 3 (P[1]) and a purchase date and time T[2] of the subsequent game 1 (P[2]) is 216 hours, and an average usage time A[1] of game 3 is 60 hours. Accordingly, an adjusted average usage time A[1] is determined to be 67.8 hours from Expression 5.

Hereinafter, assuming that the estimation unit 103 adjusts an average usage time in estimating a usage-end date and time; if there is history information of a sales date and time of a recommendation-receiving user, the average usage time is adjusted based on Expression 4; and if there is no history information of a sales date and time, the average usage time is adjusted based on Expression 5.

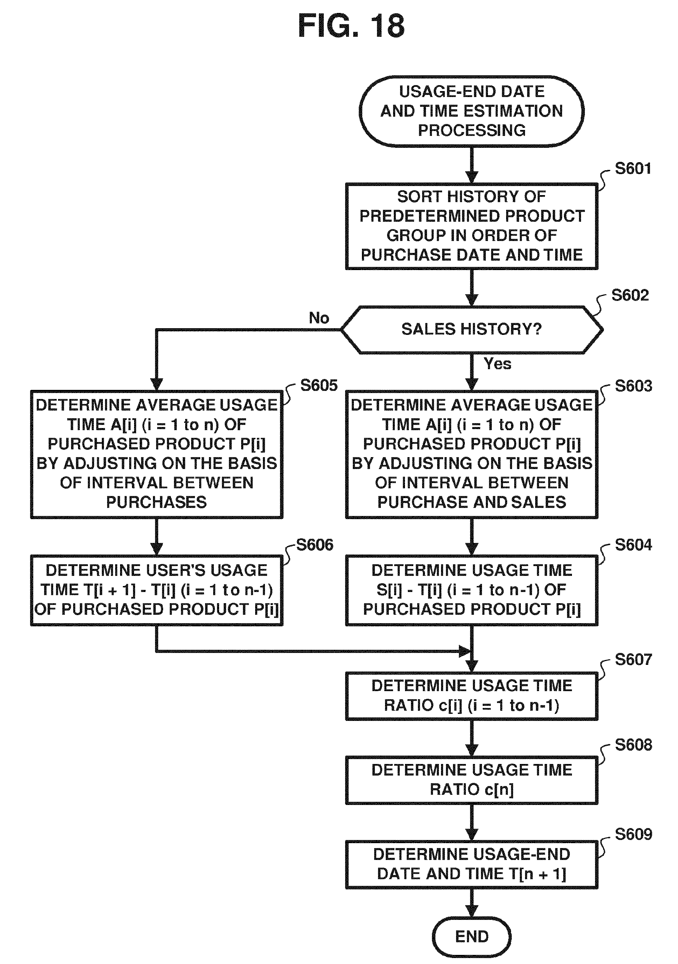

Next, operation performed by each unit of the product recommendation device 100 according to the present embodiment will be described. The product recommendation device 100 according to the present embodiment performs a processing different from that of Embodiment 3 in a usage-end date and time estimation processing, and performs the same processing as illustrated in the flow chart of FIG. 16 in a processing other than the usage-end date and time estimation processing. Hereinafter, a usage-end date and time estimation processing to perform a different processing will be described with reference to a flow chart in FIG. 18. Referring to a recommendation-receiving user as a user X, a case where the user X performs the purchase and sales activity as illustrated in FIGS. 13 and 14 will be described as an example. Since Steps S601, S604 and S606 to S609 in the flow chart of FIG. 18 are the same as Steps S501, S504 and S505 to S508 of the flow chart in FIG. 17, the description will be left out.

After history information is sorted in order of purchase date and time in Step S601, the estimation unit 103 determines whether there is a sales history for a purchased product P[i] (i = 1 to n-1) registered in the recommendation-receiving user history table 103a (Step S602). If the estimation unit 103 determines that there is the sales history (Step S602; Yes), the estimation unit 103 determines an interval between a purchase date and time and a sales date and time of the purchased product P[i] (i = 1 to n-1), and adjusts an average usage time in the average usage time table 102a of FIG. 6 on the basis of the determined interval (Step S603). Then, the estimation unit 103 performs processing Step S604 onwards to estimate a usage-end date and time. Meanwhile, if the estimation unit 103 determines there is no sales history (Step S602; No), the estimation unit 103 determines an interval between a purchase date and time of the purchased product P[i] (i = 1 to n-1) and a purchase date and time of the subsequent purchased product P[i+1], and adjusts an average usage time in the average usage time table 102a of FIG. 6 on the basis of the determined interval. Then, the estimation unit 103 performs processing Step S606 onwards to estimate a usage-end date and time.

For example, if the purchased product is "game 5", the estimation unit 103 determines that there is a sales history and adjusts an average usage time "30 hours" in the average usage time table 102a of FIG. 6 to "30.95 hours" on the basis of Expression 4. For example, if the purchased product is "game 3", the estimation unit 103 determines that there is no sales history, and adjusts an average usage time "60 hours" in the average usage time table 102a of FIG. 6 to "67.8 hours" on the basis of Expression 5.

The estimation unit 103 may estimate a usage-end date and time by using an adjusted average usage time for a product of which a purchase date and time and a sales date and time are registered as history information and by using a non-adjusted average usage time for a product of which a sales history is not registered.

A way to adjust an assumed time (average usage time) stored in the time storage unit 102 is not limited to the above way. For example, if an interval between purchases and an interval between purchase and sales by a recommendation-receiving user tends to be longer than an interval between purchases or an interval between purchase and sales by other users, an average usage time registered in the average usage time table 102a may be lengthened by multiplying by a coefficient greater than one.

According to the present embodiment, in determining an average usage time, by reflecting a purchase activity of a recommendation-receiving user, a date and time when the user finished using a product can be accurately estimated and a product can be recommended to the user at a suitable timing.

The present invention is based on Japanese Patent Application No. 2010-077359 filed on March 30, 2010. The specification, claims and drawings of Japanese Patent Application No. 2010-077359 shall be incorporated into the specification of the present application by reference.

In the present invention, various embodiments and modifications thereo f can be performed without departing from an extensive principles and scope of the present invention. The aforementioned embodiments are intended to explain the present invention, not to limit the scope of the present invention. That is, the scope of the present invention is defined by claims, not by embodiments. Various modifications performed within the scope of claims and the inventions equivalent to the claims are deemed to be within the scope of the present invention.

Industrial Applicability

The present invention can provide a product recommendation device, a product recommendation method, a program and a recording medium that are suitable for estimating a date and time when a user finishes using a product and recommending a product to the user at a suitable timing, for a type of products of which time required to finish usage varies according to each purchased product.

Description of Reference Signs

| | |
|---|---|
| 100 | Product recommendation device |
| 101 | History storage unit |
| 101a | History table |
| 102 | Time storage unit |
| 102a | Average usage time table |
| 103 | Estimation unit |
| 103a | Recommendation-receiving user history table |
| 104 | Presentation unit |
| 201, 202 to 20n | Terminal device |
| 300 | Internet |
| 400 | Information processing device |
| 401 | CPU |
| 402 | ROM |
| 403 | RAM |
| 404 | NIC |
| 405 | Image processing unit |
| 406 | Voice processing unit |
| 407 | DVD-ROM drive |
| 408 | Interface |
| 409 | External memory |
| 410 | Controller |
| 411 | Monitor |

412          Speaker

500          Image

**Claims**

1. A product recommendation device comprising:

    a time storage unit to store, for each of products included in a predetermined product group, an assumed time that is assumed to be required from start of a product usage until end of the product usage;

    a history storage unit to store history information, the history information including a user identifier of each user who purchased any of the products in the product group, the purchased product, and a purchase date and time of the product;

    an estimation unit that acquires, from the history information stored in the history storage unit, history information associated with the user identifier of a user who receives recommendation of a product (hereinafter referred to as "recommendation-receiving user"), determines, from the acquired history information, a usage time required from start of usage by the recommendation-receiving user of a product other than a product most recently purchased by the recommendation-receiving user until end of usage of the product, and estimates a date and time when the recommendation-receiving user finishes using the most recently purchased product, based on the determined usage time and the assumed time for the product associated with the acquired history information, the assumed time being stored in the time storage unit; and

    a presentation unit that selects, from the product group, a product other than the product most recently purchased by the recommendation-receiving user, and presents a message recommending the other selected product to the recommendation-receiving user at the estimated date and time.

2. The product recommendation device according to claim 1, wherein
the estimation unit
sorts products associated with history of the recommendation-receiving user stored in the history storage unit in order of purchase date and time, such as product 1, product 2, ..., product n,
determines a ratio $c[i] = (T[i+1] - T[i])/A[i]$, for each of an integer $i = 1, 2, ..., n-1$, from the purchase date and time represented by $T[i]$ when the recommendation-receiving user purchased the product i, the purchase date and time represented by $T[i+1]$ when the recommendation-receiving user purchased the product (i+1), and the assumed time represented by $A[i]$ on the product i stored in the time storage unit,
estimates, from an array of the determined ratios $c[1], c[2], ..., c[n-1]$, a ratio $c[n]$ of the product n most recently purchased by the recommendation-receiving user, and
estimates the date and time when the recommendation-receiving user finishes using the most recently purchased product n to be $T[n] + A[n] \cdot c[n]$, from the most recent purchase date and time $T[n]$, the estimated ratio $c[n]$ and the stored time $A[n]$.

3. The product recommendation device according to claim 2, wherein
the estimation unit
estimates the ratio $c[n]$ of the product n most recently purchased by the recommendation-receiving user by using a weighted mean such that the ratio $c[i]$ ($i = 1$ to $n-1$) determined from the older purchase history less contributes to the ratio $c[n]$.

4. The product recommendation device according to claim 3, wherein
the estimation unit estimates a value obtained by multiplying the weighted mean by a seasonal coefficient preliminarily defined according to a season of the purchase date and time $T[n]$ to be the ratio $c[n]$.

5. The product recommendation device according to any one of claims 1 to 4, wherein
the history information further includes a sales date and time when the purchased product was sold,
in the case where the recommendation-receiving user sold the purchased product i, the estimation unit compares the sales date and time represented by $S[i]$ when the product i was sold and the purchase date and time $T[i+1]$ when the product (i+1) was purchased, and if the sales date and time $S[i]$ is earlier than the purchase date and time $T[i+1]$, the estimation unit determines the ratio $c[i]$ to be

$$c[i] = (S[i] - T[i])/A[i]$$

**6.** The product recommendation device according to any one of claims 1 to 4, wherein,
the history information further includes a sales date and time when the purchased product was sold,
in the case where the recommendation-receiving user sold the purchased product i, the estimation unit determines the ratio c[i] to be

$$c[i] = (S[i] - T[i])/A[i]$$

using the sales date and time represented by S[i] of the product i.

**7.** The product recommendation device according to claim 5 or 6, wherein
from history information including both of the purchase date and time and the sales date and time among the history information, an interval between the purchase date and time and the sales date and time of the product associated with the history information is determined, and the assumed time stored in the time storage unit is adjusted of the product based on the determined interval.

**8.** The product recommendation device according to any one of claims 1 to 7, wherein
the assumed time stored in the time storage unit of a first product is adjusted based on an interval between the purchase date and time included in history information associated with the first product and the purchase date and time included in history information associated with the second product, the second product being the most recently purchased among products purchased by the same user as that of the first product after purchase of the first product, among the history information.

**9.** A product recommendation method performed by a product recommendation device, the product recommendation device comprising: a time storage unit to store, for each of products included in a predetermined product group, an assumed time that is assumed to be required from start of a product usage until end of the product usage; a history storage unit to store history information, the history information including a user identifier of each user who purchased any of the products in the product group, the purchased product, and a purchase date and time of the product; an estimation unit; and a presentation unit,
the product recommendation method comprising:

an estimation step in which the estimation unit acquires, from the history information stored in the history storage unit, history information associated with the user identifier of a user who receives recommendation of a product (hereinafter referred to as "recommendation-receiving user"), determines, from the acquired history information, a usage time required from start of usage by the recommendation-receiving user of a product other than a product most recently purchased by the recommendation-receiving user until end of usage of the product, and estimates a date and time when the recommendation-receiving user finishes using the most recently purchased product. based on the determined usage time and the assumed time for the product associated with the acquired history information, the assumed time being stored in the time storage unit; and
a presentation step in which the presentation unit selects, from the product group, a product other than the product most recently purchased by the recommendation-receiving user, and presents a message recommending the other selected product to the recommendation-receiving user at the estimated date and time.

**10.** A program causing a computer to function as:

a time storage unit to store, for each of products included in a predetermined product group, an assumed time that is assumed to be required from start of a product usage until end of the product usage;
a history storage unit to store history information, the history information including a user identifier of each user who purchased any of the products in the product group, the purchased product, and a purchase date and time of the product;
an estimation unit that acquires, from the history information stored in the history storage unit, history information associated with the user identifier of a user who receives recommendation of a product (hereinafter referred to as "recommendation-receiving user"), determines, from the acquired history information, a usage time required from start of usage by the recommendation-receiving user of a product other than a product most recently purchased by the recommendation-receiving user until end of usage of the product, and estimates a date and time when the recommendation-receiving user finishes using the most recently purchased product, based on the determined usage time and the assumed time for the product associated with the acquired history information, the assumed time being stored in the time storage unit; and

a presentation unit that selects, from the product group, a product other than the product most recently purchased by the recommendation-receiving user, and presents a message recommending the other selected product to the recommendation-receiving user at the estimated date and time.

11. A computer-readable recording medium recording a program, the program causing a computer to function as:

a time storage unit to store, for each of products included in a predetermined product group, an assumed time that is assumed to be required from start of a product usage until end of the product usage;

a history storage unit to store history information, the history information including a user identifier of each user who purchased any of the products in the product group, the purchased product, and a purchase date and time of the product;

an estimation unit that acquires, from the history information stored in the history storage unit, history information associated with the user identifier of a user who receives recommendation of a product (hereinafter referred to as "recommendation-receiving user"), determines, from the acquired history information, a usage time required from start of usage by the recommendation-receiving user of a product other than a product most recently purchased by the recommendation-receiving user until end of usage of the product, and estimates a date and time when the recommendation-receiving user finishes using the most recently purchased product, based on the determined usage time and the assumed time for the product associated with the acquired history information, the assumed time being stored in the time storage unit; and

a presentation unit that selects, from the product group, a product other than the product most recently purchased by the recommendation-receiving user, and presents a message recommending the other selected product to the recommendation-receiving user at the estimated date and time.

# FIG. 1

100

PRODUCT RECOMMENDATION DEVICE

300

201 TERMINAL DEVICE

202 TERMINAL DEVICE

- - -

20n TERMINAL DEVICE

# FIG. 2

401
CPU

402
ROM

403
RAM

404
NIC

405
IMAGE PROCESSING UNIT

406
SPEECH PROCESSING UNIT

407
DVD-ROM DRIVE

408
INTERFACE

409
EXTERNAL MEMORY

410
CONTROLLER

411
MONITOR

412
SPEAKER

400

# FIG. 3

RECOMMENDATION
PRODUCT

104

PRESENTATION
UNIT

→ USER

101

PURCHASE
HISTORY

HISTORY
STORAGE
UNIT

103

ESTIMATION
UNIT

102

TIME
STORAGE
UNIT

100

# FIG. 4

EP 2 555 148 A1

PURCHASE
OF FOOD 1

PURCHASE
OF FOOD 1

PURCHASE
OF FOOD 1

PURCHASE
OF FOOD 1

PURCHASE
OF FOOD 1

PURCHASE
OF FOOD 1

PURCHASE
OF FOOD 1

PURCHASE
OF GAME 1

PURCHASE
OF GAME 3

PURCHASE
OF BOOK 2

PURCHASE
OF DVD 1

PURCHASE
OF GAME 5

PURCHASE
OF BOOK 1

PURCHASE
OF GAME 4

PURCHASE
OF GAME 2

t[1]

t[2]

t[3]

t[4]

t[5]

t[6]

t[7]

t[8]

t[9]

t[10]

t[11]

t[12]

t[13]

t[14]

t[15]

Time

# FIG. 5

### HISTORY TABLE 101a

|  101a1  |  101a2  |  101a3  |  101a4  |
|---|---|---|---|
| USER ID | PRODUCT GROUP | PURCHASED PRODUCT p[i] | PURCHASE DATE AND TIME  t[i] |
| X | GAME | p[1] = GAME 3 | t[1] = 22:00 ON APRIL 7 |
|  | BOOK | p[3] = BOOK 2 | t[3] = 12:00 ON APRIL 9 |
|  | DVD | p[6] = DVD1 | t[6] = 16:00 ON APRIL 14 |
|  | GAME | p[7] = GAME 1 | t[7] = 22:00 ON APRIL 16 |
|  | GAME | p[9] = GAME 5 | t[9] = 23:00 ON APRIL 20 |
|  | BOOK | p[11] = BOOK 1 | t[11] = 22:00 ON APRIL 23 |
|  | GAME | p[13] = GAME 4 | t[13] = 23:00 ON APRIL 26 |
|  | GAME | p[15] = GAME 2 | t[15] = 21:00 ON APRIL 29 |
| Y | BOOK | p[1] = BOOK 1 | t[1] = 19:00 ON APRIL 1 |
|  | : | : | : |
| : | : | : | : |

# FIG. 6

AVERAGE USAGE TIME TABLE 102a

| PRODUCT GROUP | PRODUCT | AVERAGE USAGE TIME |
|---|---|---|
| GAME | GAME 1 | 20 |
|  | GAME 2 | 50 |
|  | GAME 3 | 60 |
|  | GAME 4 | 40 |
|  | GAME 5 | 30 |
|  | : | : |
|  | GAME x | 50 |
| BOOK | BOOK 1 | 10 |
|  | BOOK 2 | 8 |
|  | : | : |
|  | BOOK y | 12 |
| DVD | DVD 1 | 4 |
|  | : | : |
|  | DVD z | 3 |
| : | : | : |

102a1  102a2  102a3

# FIG. 7

RECOMMENDATION-RECEIVING USER HISTORY TABLE 103a

| USER ID | PRODUCT GROUP | PURCHASED PRODUCT P[i] | PURCHASE DATE AND TIME T[i] | AVERAGE USAGE TIME A[i] |
|---|---|---|---|---|
| | | 103a3 | 103a4 | 103a5 |
| X | GAME | P[1] = GAME 3 | T[1] = 22:00 ON APRIL 7 | A[1] = 60 |
| | | P[2] = GAME 1 | T[2] = 22:00 ON APRIL 16 | A[2] = 20 |
| | | P[3] = GAME 5 | T[3] = 23:00 ON APRIL 20 | A[3] = 30 |
| | | P[4] = GAME 4 | T[4] = 23:00 ON APRIL 26 | A[4] = 40 |
| | | P[5] = GAME 2 | T[5] = 21:00 ON APRIL 29 | A[5] = 50 |

# FIG. 8

500

**FOLLOWING IS A PRODUCT RECOMMENDATION TO USER X**

○○○ GAME

○○○GAME
PRICE: 1,000 YEN
（1,050 YEN INCLUDING TAX）
DELIVERY: NO CHARGE

NUMBER IN STOCK:10個

UNITS OF
PURCHASED | 1 | **PLACE IT IN THE SHOPPING BAG**

# FIG. 9

```
        ┌─────────────────┐
        │    PRODUCT      │
        │ RECOMMENDATION  │
        │   PROCESSING    │
        └────────┬────────┘
                 │         ◄──────────── (A)
       ┌─────────▼──────────┐
  No   │    PRODUCT IN      │  S101
  ◄────│   PREDETERMINED    │
       │ PRODUCT GROUP WAS  │
       │    PURCHASED?      │
       └─────────┬──────────┘
                Yes
        ┌────────▼────────┐  S102
        │ STORE PURCHASE  │
        │    HISTORY      │
        └────────┬────────┘
        ┌────────▼────────┐  S103
        ║USAGE-END DATE AND║
        ║ TIME ESTIMATION  ║
        ║   PROCESSING     ║
        └────────┬─────────┘
       ┌─────────▼──────────┐
  No   │  ESTIMATED USAGE-  │  S104
  ◄────│ END DATE AND TIME? │
       └─────────┬──────────┘
                Yes
        ┌────────▼────────┐  S105
        │ PRESENT PRODUCT │
        │ RECOMMENDATION  │
        │    MESSAGE      │
        └────────┬────────┘
                 │
                (A)
```

# FIG. 10

USAGE-END DATE
AND TIME ESTIMATION
PROCESSING

S201

SORT HISTORY OF
PREDETERMINED PRODUCT
GROUP IN ORDER OF
PURCHASE DATE AND TIME

S202

DETERMINE AVERAGE USAGE
TIME $A[i]$ $(i = 1$ to $n)$ OF
PURCHASED PRODUCT $P[i]$

S203

DETERMINE USAGE TIME
$T[i + 1] - T[i]$ $(i = 1$ to $n-1)$ OF
PURCHASED PRODUCT $P[i]$

S204

DETERMINE USAGE TIME
RATIO $c[i]$ $(i = 1$ to $n-1)$

S205

DETERMINE USAGE TIME
RATIO $c[n]$

S206

DETERMINE USAGE-END
DATE AND TIME $T[n + 1]$

END

# FIG. 11

SEASONAL COEFFICIENT TABLE 601a

|  | 601a1 | 601a2 | 601a3 | 601a4 |
|---|---|---|---|---|
|  | USER ID | ATTRIBUTE | DURATION | SEASONAL COEFFICIENT |
|  | X | STUDENT | APRIL 29 TO MAY 5 | 0.6 |
|  |  |  | JULY 25 TO AUGUST 31 | 0.9 |
|  |  |  | DECEMBER 25 TO JANUARY 7 | 0.8 |
|  |  |  | : | : |
|  | Y | OFFICE WORKER | APRIL 29 TO MAY 5 | 0.5 |
|  |  |  | DECEMBER 30 TO JANUARY 3 | 0.9 |
|  |  |  | : | : |
|  | : | : | : | : |

# FIG. 12

USAGE-END DATE
AND TIME ESTIMATION
PROCESSING

↓

SORT HISTORY OF
PREDETERMINED PRODUCT
GROUP IN ORDER OF
PURCHASE DATE AND TIME — S301

↓

DETERMINE AVERAGE USAGE
TIME A[i] (i = 1 to n) OF
PURCHASED PRODUCT P[i] — S302

↓

DETERMINE USAGE TIME
T[i + 1] - T[i] (i = 1 to n-1) OF
PURCHASED PRODUCT P[i] — S303

↓

DETERMINE USAGE TIME
RATIO c[i] (i = 1 to n-1) — S304

↓

DETERMINE USAGE TIME
RATIO c[n] — S305

↓

DETERMINE SEASONAL
COEFFICIENT Q — S306

↓

DETERMINE USAGE-END
DATE AND TIME T[n + 1] — S307

↓

END

# FIG. 13

EP 2 555 148 A1

# FIG. 14

## HISTORY TABLE 101a

| USER ID | PRODUCT GROUP | PURCHASED PRODUCT p[i] | PURCHASE DATE AND TIME t[j] | SALES DATE AND TIME t[j] |
|---|---|---|---|---|
| | | 101a2 | 101a3 | 101a4 | 101a5 |
| X | GAME | p[1] = GAME 3 | t[1] = 22:00 ON APRIL 7 | - |
| | BOOK | p[3] = BOOK 2 | t[3] = 12:00 ON APRIL 9 | - |
| | DVD | p[6] = DVD1 | t[6] = 16:00 ON APRIL 14 | - |
| | GAME | p[7] = GAME 1 | t[7] = 22:00 ON APRIL 16 | t[14] = 22:00 ON APRIL 24 |
| | GAME | p[9] = GAME 5 | t[9] = 23:00 ON APRIL 20 | t[11] = 0:00 ON APRIL 23 |
| | BOOK | p[11] = BOOK 1 | t[12] = 22:00 ON APRIL 23 | - |
| | GAME | p[13] = GAME 4 | t[15] = 23:00 ON APRIL 26 | - |
| | GAME | p[15] = GAME 2 | t[17] = 21:00 ON APRIL 29 | - |
| Y | BOOK | p[1] = BOOK 1 | t[1] = 19:00 ON APRIL 1 | - |
| | : | : | : | : |
| : | : | : | : | : |

Column labels: 101a1 (USER ID), 101a2 (PRODUCT GROUP), 101a3 (PURCHASED PRODUCT p[i]), 101a4 (PURCHASE DATE AND TIME t[j]), 101a5 (SALES DATE AND TIME t[j])

EP 2 555 148 A1

# FIG. 15

RECOMMENDATION-RECEIVING USER HISTORY TABLE 103a

| 103a1<br>USER ID | 103a2<br>PRODUCT<br>GROUP | 103a3<br>PURCHASED<br>PRODUCT P[i] | 103a4<br>PURCHASE DATE AND<br>TIME T[i] | 103a5<br>AVERAGE USAGE<br>TIME A[i] | 103a6<br>SALES DATE AND TIME<br>S[i] |
|---|---|---|---|---|---|
| | | P[1] = GAME 3 | T[1] = 22:00 ON APRIL 7 | A[1] = 60 | S[1] = - |
| | | P[2] = GAME 1 | T[2] = 22:00 ON APRIL 16 | A[2] = 20 | S[2] = 22:00 ON APRIL 24 |
| X | GAME | P[3] = GAME 5 | T[3] = 23:00 ON APRIL 20 | A[3] = 30 | S[3] = 0:00 ON APRIL 23 |
| | | P[4] = GAME 4 | T[4] = 23:00 ON APRIL 26 | A[4] = 40 | S[4] = - |
| | | P[5] = GAME 2 | T[5] = 21:00 ON APRIL 29 | A[5] = 50 | S[5] = - |

# FIG. 16

PRODUCT RECOMMENDATION PROCESSING

A

PRODUCT IN PREDETERMINED PRODUCT GROUP WAS PURCHASED? — S401

No

Yes

S403 — PRODUCT IN PURCHASE HISTORY WAS SOLD?

No → A

Yes

STORE PURCHASE HISTORY — S402

STORE SALES HISTORY — S404

USAGE-END DATE AND TIME ESTIMATION PROCESSING — S405

ESTIMATED USAGE-END DATE AND TIME? — S406

No

Yes

PRESENT PRODUCT RECOMMENDATION MESSAGE — S407

A

# FIG. 17

```
        ╭─────────────────────╮
        │   USAGE-END DATE     │
        │ AND TIME ESTIMATION  │
        │     PROCESSING       │
        ╰─────────────────────╯
                  │
                  ▼
        ┌─────────────────────┐  S501
        │   SORT HISTORY OF    │
        │ PREDETERMINED PRODUCT│
        │   GROUP IN ORDER OF  │
        │ PURCHASE DATE AND TIME│
        └─────────────────────┘
                  │
                  ▼
        ┌─────────────────────┐  S502
        │ DETERMINE AVERAGE USAGE│
        │  TIME A[i] (i = 1 to n) OF│
        │  PURCHASED PRODUCT P[i]│
        └─────────────────────┘
                  │
                  ▼
```

S503

No ◁ SALES HISTORY? ▷

Yes

**S505** — DETERMINE USER'S USAGE TIME T[i + 1] - T[i] (i = 1 to n-1) OF PURCHASED PRODUCT P[i]

**S504** — DETERMINE USAGE TIME S[i] - T[i] (i = 1 to n-1) OF PURCHASED PRODUCT P[i]

**S506** — DETERMINE USAGE TIME RATIO c[i] (i = 1 to n-1)

**S507** — DETERMINE USAGE TIME RATIO c[n]

**S508** — DETERMINE USAGE-END DATE AND TIME T[n + 1]

END

# FIG. 18

```
┌─────────────────────────┐
│     USAGE-END DATE      │
│  AND TIME ESTIMATION    │
│      PROCESSING         │
└─────────────────────────┘
            │
            ▼                           S601
┌─────────────────────────┐
│    SORT HISTORY OF      │
│ PREDETERMINED PRODUCT   │
│    GROUP IN ORDER OF    │
│ PURCHASE DATE AND TIME  │
└─────────────────────────┘
            │
            ▼                           S602
     No ◄── ╱ SALES HISTORY? ╲
     │          │
     │          │ Yes
     ▼ S605     ▼ S603
```

| DETERMINE AVERAGE USAGE TIME A[i] (i = 1 to n) OF PURCHASED PRODUCT P[i] BY ADJUSTING ON THE BASIS OF INTERVAL BETWEEN PURCHASES | DETERMINE AVERAGE USAGE TIME A[i] (i = 1 to n) OF PURCHASED PRODUCT P[i] BY ADJUSTING ON THE BASIS OF INTERVAL BETWEEN PURCHASE AND SALES |
|---|---|

```
            │ S606              │ S604
            ▼                   ▼
```

| DETERMINE USER'S USAGE TIME T[i + 1] - T[i] (i = 1 to n-1) OF PURCHASED PRODUCT P[i] | DETERMINE USAGE TIME S[i] - T[i] (i = 1 to n-1) OF PURCHASED PRODUCT P[i] |
|---|---|

```
                                ▼                S607
                ┌─────────────────────────┐
                │  DETERMINE USAGE TIME   │
                │ RATIO c[i] (i = 1 to n-1)│
                └─────────────────────────┘
                            │                    S608
                            ▼
                ┌─────────────────────────┐
                │  DETERMINE USAGE TIME   │
                │       RATIO c[n]        │
                └─────────────────────────┘
                            │                    S609
                            ▼
                ┌─────────────────────────┐
                │ DETERMINE USAGE-END     │
                │ DATE AND TIME T[n + 1]  │
                └─────────────────────────┘
                            │
                            ▼
                         ( END )
```

<div align="center">

**INTERNATIONAL SEARCH REPORT**

</div>

| | International application No. |
|---|---|
| | PCT/JP2011/057682 |

**A. CLASSIFICATION OF SUBJECT MATTER**
*G06Q30/00(2006.01)i*

According to International Patent Classification (IPC) or to both national classification and IPC

**B. FIELDS SEARCHED**

Minimum documentation searched (classification system followed by classification symbols)
G06Q30/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2007-265077 A (Nomura Research Institute,<br>Ltd.),<br>11 October 2007 (11.10.2007),<br>entire text; all drawings<br>(Family: none) | 1-3,9-11<br>4<br>5-8 |
| Y<br>A | JP 3148485 U (Higashi Ginza Insatsu Shuppan<br>Kabushiki Kaisha),<br>28 January 2009 (28.01.2009),<br>entire text; all drawings<br>(Family: none) | 4<br>1-3,5-11 |
| A | JP 2002-259440 A (Rakuten, Inc.),<br>13 September 2002 (13.09.2002),<br>entire text; all drawings<br>(Family: none) | 1-11 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 June, 2011 (21.06.11) | Date of mailing of the international search report<br>28 June, 2011 (28.06.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/057682 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2009-122781 A  (Yahoo Japan Corp.), 04 June 2009 (04.06.2009), entire text; all drawings (Family: none) | 1-11 |
| A | JP 2008-176398 A  (Sony Corp.), 31 July 2008 (31.07.2008), entire text; all drawings (Family: none) | 1-11 |
| A | JP 2008-225629 A  (Ricoh Co., Ltd.), 25 September 2008 (25.09.2008), entire text; all drawings (Family: none) | 1-11 |

Form PCT/ISA/210 (continuation of second sheet) (July 2009)

**EP 2 555 148 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3984473 B
- JP 2010077359 A